# EUROPÄISCHE PATENTSCHRIFT

(11) **EP 2 571 593 B1**
(45) Veröffentlichungstag und Bekanntmachung des Hinweises auf die Patenterteilung: **07.03.2018**
(21) Anmeldenummer: 11730239.8
(22) Anmeldetag: 17.05.2011
(51) Int. Cl.: B01D 29/96, B01D 29/21, B01D 35/16, B01D 35/153

(54) **FILTER, FILTERELEMENT UND BEFESTIGUNGSGEHÄUSETEIL EINES FILTERGEHÄUSES MIT EINER SCHALTEINRICHTUNG EINER LÖSBAREN RASTVERBINDUNG**
FILTER, FILTER ELEMENT AND FASTENING HOUSING PART OF A FILTER HOUSING WITH A SWITCHING DEVICE OF A RELEASABLE DETENT CONNECTION
FILTRE, ÉLÉMENT FILTRANT ET PARTIE DE BOÎTIER DE FIXATION D'UN BOÎTIER DE FILTRE AVEC UN DISPOSITIF D'ACCOUPLEMENT D'UN ASSEMBLAGE PAR ENCLIQUETAGE LIBÉRABLE

(30) Priorität: 17.05.2010 DE 102010020727
(43) Veröffentlichungstag der Anmeldung: 27.03.2013
(73) Patentinhaber: Mann + Hummel GmbH, 71636 Ludwigsburg (DE)
(72) Erfinder: RÖSGEN, André, 73630 Remshalden (DE)
(86) Internationale Anmeldenummer: PCT/EP2011/057908
(87) Internationale Veröffentlichungsnummer: WO 2011/144582

(56) Entgegenhaltungen:
- EP-A1- 0 959 978
- GB-A- 1 295 777
- NL-C2- 2 001 709
- US-A- 4 210 537
- US-A- 5 045 192

## Beschreibung

### Technisches Gebiet

Die Erfindung betrifft einen Filter zur Filtrierung von Fluiden, insbesondere Kraftstoff oder Öl, insbesondere eines Kraftfahrzeugs, umfassend ein Gehäuse, das aus wenigstens zwei Gehäuseteilen besteht, und ein Filterelement, das mittels einer lösbaren Rastverbindung in einem der Gehäuseteile, das als Befestigungsgehäuseteil für das Filterelement wirkt, befestigt ist, wobei die Rastverbindung wenigstens zwei zusammenwirkende Rastbauteile aufweist, und eines der Rastbauteile mit dem Filterelement und eines der Rastbauteile mit dem Befestigungsgehäuseteil verbunden ist und wenigstens eines der Rastbauteile wenigstens ein Rastmittel umfasst und eines der Rastbauteile eine mit dem Rastmittel korrespondierende Aussparung, in der sich das Rastmittel bajonettartig verhakt, umfasst, und die Aussparung folgende Bereiche aufweist:
- einen Schließbereich zur Aufnahme des Rastmittels während der Verbindung der Gehäuseteile,
- einen Rückhaltebereich zur Aufnahme des Rastmittels während der Öffnung des Filtergehäuses,
- einen Translationsbereich zur Lösung des Rastmittels in der Aussparung und
- einen Einfuhr-/Ausfuhrbereich zum widerstandsfreien Zusammenfügen und Trennen von Rastmittel und Aussparung.

Ferner betrifft die Erfindung ein Filterelement eines Filters, das ein Rastbauteil aufweist, das geeignet ist, mit einem Rastbauteil, welches mit einem Befestigungsgehäuseteil eines Filtergehäuses verbunden ist, eine lösbare Rastverbindung zu bilden, wobei eines der Rastbauteile wenigstens ein Rastmittel umfasst und eines der Rastbauteile eine mit dem Rastmittel korrespondierende Aussparung, in dem sich das Rastmittel bajonettartig verhakt, umfasst.

Im Übrigen betrifft die Erfindung ein Befestigungsgehäuseteil eines Filtergehäuses eines Filters, das ein Rastbauteil aufweist, das geeignet ist, mit einem Rastbauteil, welches mit einem Filterelement des Filters verbunden ist, eine lösbare Rastverbindung zu bilden, wobei wenigstens eines der Rastbauteile wenigstens ein Rastmittel und eines der Rastbauteile eine mit dem Rastmittel korrespondierende Aussparung, in dem sich das Rastmittel bajonettartig verhakt, umfasst.

Außerdem betrifft die Erfindung ein Teleskopschaltelement einer Schalteinrichtung einer lösbaren Rastverbindung zur Befestigung eines Filterelements in einem Befestigungsgehäuseteil eines Filters zur Filtrierung von Fluiden, insbesondere Kraftstoff oder Öl, insbesondere eines Kraftfahrzeugs.

### Stand der Technik

Aus der EP 0 959 978 B1 ist ein Filter bekannt, der ein Gehäuse aufweist, das seinerseits aus zwei verschraubten Gehäuseteilen besteht. Zur Erzeugung einer zuverlässigen Rastverbindung zwischen Filterelement und einem Deckelgehäuseteil ist im Bereich des Deckelgehäuse-teils eine Aussparung angebracht. Diese Aussparung verfügt über verschiedene Funktionsbereiche, nämlich einen Schließbereich, einen Rückhaltebereich, einen Translationsbereich und einen Einfuhr-/Ausfuhrbereich, die zum Herstellen beziehungsweise Lösen der Rastverbindung erforderlich sind. Durch Relativdrehungen zwischen dem Filterelement und dem Deckelgehäuseteil können Rastmittel des Filterelements zwischen den Funktionsbereichen bewegt werden.

Der Erfindung liegt die Aufgabe zugrunde, einen Filter, ein Filterelement, ein Befestigungsgehäuseteil und ein Teleskopschaltelement der eingangs genannten Art so zu gestalten, dass das Filterelement noch einfacher und sicherer in das Filtergehäuse eingebaut und aus dem Filtergehäuse ausgebaut werden kann. Insbesondere soll das wenigstens eine Rastmittel noch einfacher und präziser in der Aussparung bewegt werden können. Ferner sollte beim Austausch des Filterelements möglichst kein Fluid aus dem Filter unkontrolliert in die Umgebung gelangen. Im Übrigen soll eine falsche Montage und/oder der Einbau eines nicht zum Filter passenden Filterelements einfach erkennbar werden, vorzugsweise verhindert werden.

### Offenbarung der Erfindung

Diese Aufgabe wird erfindungsgemäß dadurch gelöst, dass eine Schalteinrichtung wenigstens zwei korrespondierende Schaltbauteile umfasst, wobei eines der Schaltbauteile mit dem Filterelement und eines der Schaltbauteile mit dem Befestigungsgehäuseteil verbunden ist, und eines der Schaltbauteile wenigstens eine sich radial zu einer Dreh-/Steckachse des Filters erstreckende Schaltnase und eines der Schaltbauteile eine Schaltkulisse zur Führung der Schaltnase umfasst, derart, dass die Schaltkulisse bei einer impulsförmigen Axialbewegung des Filterelements relativ auf das Befestigungsgehäuseteil zu die Schaltnase führt und dadurch eine Drehbewegung des Filterelements relativ zum Befestigungsgehäuseteil um die Dreh-/Steckachse bewirkt zum bewegen des Rastmittels aus dem Einfuhr-/Ausfuhrbereich in den Schließbereich oder aus dem Rückhaltebereich in den Einfuhr-/Ausfuhrbereich, je nach Position des Rastmittels in der Aussparung vor Einwirkung der Axialbewegung.

Erfindungsgemäß wird mit der Schalteinrichtung die Rastverbindung aktiviert und deaktiviert. Hierzu wird eine impulsförmige Axialbewegung des Filterelements relativ zum Befestigungsgehäuseteil in eine Relativdrehung umgewandelt zur Bewegung des Rastmittels in den Bereichen der Aussparung. Derartige impulsförmige Axialbewegungen können vorzugsweise bei offenem Filtergehäuse einfach einhändig durch stoßen mit der freien Stirnseite des Filterelements gegen einen festen Körper, insbesondere eine Tischplatte oder einer Abtropfwanne, erzeugt werden, ohne dass das unter Umständen mit Fluid verschmierte Filterelement direkt angefasst werden muss. Zur Montage des Filters wird das Filterelement in das Befestigungsgehäuseteil gesteckt. Durch eine erste impulsförmige Axialbewegung des Filterelements wird mit der Schalteinrichtung die Schaltnase vom Einfuhr-/Ausfuhrbereich in den Schließbereich gedreht. Das Filterelement wird so in dem Befestigungsgehäuseteil gehalten, selbst wenn dieser mit seiner offenen Seite nach unten gerichtet wird. Das Befestigungsgehäuseteil mit dem Filterelement kann so einfach und sicher auch an schwer zugänglichen, insbesondere verdeckten Stellen in einem Motorraum, an ein entsprechendes systemfestes Gehäuseteil montiert werden. Zur Demontage wird das Befestigungsgehäuseteil mit dem Filterelement von dem systemfesten Gehäuseteil getrennt. Dabei wird das Rastmittel über den Translationsbereich automatisch in den Rückhaltebereich der Aufnahme gedreht, so dass das Filterelement im Befestigungsgehäuseteil gehalten wird. Das Befestigungsgehäuseteil kann dann sicher, ohne dass das Filterelement herausfällt, einhändig vom systemfesten Gehäuseteil getrennt werden und mit der Öffnung nach unten zum abtropfen des im Befestigungsgehäuseteil noch befindlichen Restfluids abgestellt werden. Da die Rastmittel nach wie vor im Rückhaltebereich verrastet sind, kann das Filterelement beim einhändigen Umdrehen des Befestigungsgehäuseteils nicht unkontrolliert herausfallen. Zur Trennung wird eine weitere impulsförmige Axialbewegung auf das Filterelement ausgeübt, durch welche mittels der Schalteinrichtung das Rastmittel aus dem Rückhaltebereich in den Einfuhr-/Ausfuhrbereich gedreht wird. Das Filterelement wird dann ohne Widerstand von dem Befestigungsgehäuseteil getrennt. Die Schalteinrichtung kann sich vorteilhafterweise platzsparend im Zentrum einer Stirnseite des Filterelements befinden. Die Rasteinrichtung kann einfach an der Umfangsseite an derselben oder der anderen Stirnseite des Filterelements angeordnet sein. Umgekehrt kann die Schalteinrichtung auch an der Umfangsseite einer der Stirnseiten und die Rasteinrichtung im Zentrum einer der Stirnseiten des Filterelements angeordnet sein. Das Rastmittel kann vorteilhafterweise insbesondere in Form einer Rastnase direkt oder über einen Rastring oder ein ähnliches Verbindungsteil am Filterelement verbunden sein. Die Aussparung kann in einer Erhebung an der Innenmantelseite des Befestigungsgehäuseteils realisiert sein. Auf diese Weise kann das Rastmittel, welches in der Regel verschleißtechnisch anfälliger ist als die Aussparungen, gemeinsam mit dem Filterelement ausgetauscht. Die Schaltnase kann an einem separaten Bauteil, insbesondere einem Standzylinder oder einem Tauchzylinder eines Teleskopschaltelements, realisiert sein. Dieses Bauteil kann lösbar, insbesondere mit einer Schraubverbindung, am Befestigungsgehäuseteil befestigt sein, so dass es insbesondere bei Verschleiß einfach ausgetauscht werden kann. Das Bauteil kann so auch bei bestehenden Befestigungsgehäuseteilen nachgerüstet werden. Das Bauteil kann als Modul vorgefertigt sein und so einfach montiert werden. Die Schaltkulisse kann einfach insbesondere in einer axialen Vertiefung einer Endscheibe des Filterelements realisiert sein. Dadurch, dass die Rastverbindung und die Schalteinrichtung aneinander angepasst sind, wird verhindert, dass ein Filterelement ohne, mit einer nicht zum Befestigungsgehäuseteil passenden oder mit einer fehlerhaften Rastverbindung und/oder Schalteinrichtung montiert werden kann. Auf diese Weise werden Beeinträchtigungen der Filterfunktion, hervorgerufen insbesondere durch Falschmontage, verhindert.

Die Schalteinrichtung weist wenigstens ein elastisches Element, insbesondere eine Spiraldruckfeder, auf zur Realisierung einer Vorspannung zwischen dem Befestigungsgehäuseteil und dem Filterelement. Dadurch kann eine Rückstellkraft, insbesondere eine Federkraft, zwischen dem Befestigungsgehäuseteil und dem Filterelement erzeugt werden. Zum Verbinden des Befestigungsgehäuseteils mit dem anderen Gehäuseteil kann das Filterelement gegen das elastische Element in das Befestigungsgehäuseteil in axialer Richtung eingedrückt werden. Die so erzeugte Rückstellkraft bewirkt beim Verändern, insbesondere Lösen, der Rastverbindung, dass das Filterelement in axialer Richtung aus dem Befestigungsgehäuseteil heraus gedrückt wird. Das Filterelement gibt so im Befestigungsgehäuseteil ein Volumen frei, in das Restfluid, welches im Filterelement verblieben ist, nachfließen kann. Auf diese Weise wird verhindert, dass Fluid beim Austausch des Filterelements in die Umgebung gelangt. Das elastische Element ist an das Filterelement und das Befestigungsgehäuseteil angepasst, so dass ein Einbau des Filterelements ohne das passende elastische Element nicht möglich ist. Auf diese Weise werden Funktionsstörungen des Filters verhindert.

Vorteilhafterweise kann die Schaltkulisse als Schalthülse realisiert sein, die in Umfangsrichtung eine Aufeinanderfolge von Fortschaltzähnen oder Führungswinkeln aufweist. Eine Schalthülse mit Fortschaltzähnen oder Führungswinkeln kann einfach hergestellt werden. Insbesondere kann eine derartige Schaltkulisse einfach aus Kunststoff geformt oder aus Metall geschnitten, gefräst oder gestanzt werden.

Vorteilhafterweise kann eines der Schaltbauteile ein Teleskopschaltelement aufweisen mit einem Standzylinder und einem Tauchzylinder, zwischen denen das elastische Element wirkt und die zur Einbringung des Filterelements in das Befestigungsgehäuseteil unter Realisierung einer Vorspannung des elastischen Elementes ineinander geschoben werden können. Bei einem Teleskopschaltelement werden der Standzylinder und der Tauchzylinder bei Axialbewegungen relativ zueinander stabil geführt.

Ferner kann das Teleskopschaltelement vorteilhafterweise einen lösbaren Sperrmechanismus aufweisen, der im Grundzustand aktiviert ist und das Zusammenschieben des Teleskopschaltelements blockiert, und das andere Schaltbauteil kann wenigstens ein Entriegelungselement aufweisen, das an den Sperrmechanismus angepasst ist, derart, dass das Entriegelungselement beim Zusammenfügen des Teleskopschaltelements und des anderen Schaltbauteils den Sperrmechanismus deaktiviert. Das Entriegelungselement und der Sperrmechanismus wirken nach dem Schlüssel-Schlossprinzip zusammen, wobei eines der Bauteile mit dem Filterelement und das andere Bauteil mit dem Befestigungsgehäuseteil verbunden ist. Um den Sperrmechanismus zu entriegeln, ist das passende Entriegelungselement erforderlich, andern-falls verhindert das ausgefahrene Teleskopschaltelement, dass das Filterelement vollständig in das Befestigungsgehäuseteil eingesteckt werden kann. Das Filterelement ragt dann aus dem Befestigungsgehäuseteil heraus, was von außen einfach erkannt werden kann. Auf diese Weise wird verhindert, dass ein nicht zu dem Filter passendes Filterelement verwendet wird.

Bei einer weiteren vorteilhaften Ausführungsform kann insbesondere an einer Stirnseite des Filterelements eine Ringdichtung zur Abdichtung gegen das Filtergehäuse befestigt sein, die axial zur Dreh-/Steckachse relativ zum Filterelement verschiebbar ist. Die Ringdichtung kann vorteilhafterweise ein halbmondförmiges Profil aufweisen, so dass die Ringdichtung radial außen gewölbt ist und sich optimal an eine entsprechende Dichtfläche des Filtergehäuses anschmiegen kann. Radial innen kann die Ringdichtung flach sein und kann platzsparend an einem entsprechenden Stützring anliegen, welcher die Ringdichtung tragen und stützen kann. Der Stützring kann über einen einfachen Führungsmechanismus mit dem Filterelement verbunden und relativ zu diesem in axialer Richtung verschiebbar sein. Mittels der verschiebbaren Ringdichtung ist das Filterelement auf dieser Stirnseite schwimmend im Filtergehäuse gelagert. Die Ringdichtung kann vorteilhafterweise insbesondere bei der Öffnung und Schließung des Filtergehäuses verschoben werden. Die Ringdichtung kann einfach mit dem Filterelement gemeinsam ausgetauscht werden. Vorteilhafterweise kann die verschiebbare Ringdichtung an der dem Boden des Befestigungsgehäuseteils abgewandten Stirnseite außerhalb des Befestigungsgehäuseteils angeordnet sein und gegen die Innenseite des anderen, vorzugsweise systemfesten Gehäuseteils abdichten. Bei der Trennung des Befestigungsgehäuseteils von dem anderen Gehäuseteil kann so die Ringdichtung bis zum Erreichen ihrer Verschiebungsgrenze noch gegen den anderen Gehäuseteil abdichten, um zu verhindern, dass Fluid aus dem anderen Gehäuseteil in die Umgebung gelangt. Wenn die Ringdichtung so ausgestaltet ist, dass sie gegen das andere Gehäuseteil abdichtet, kann vorteilhafterweise die Wandstärke des Befestigungsgehäuseteils reduziert werden. Außerdem kann mit der verschiebbaren Ringdichtung unterbunden werden, dass eine fehlerhafte oder eine nicht zum Filtergehäuse passende Ringdichtung oder ein Filterelement mit einer fehlerhaften oder nicht passenden Ringdichtung verwendet wird, so dass Störungen der Filterfunktion einfach vermieden werden können.

Die technische Aufgabe wird erfindungsgemäß ferner dadurch gelöst, dass das Filterelement ein Schaltbauteil mit einer Schaltkulisse umfasst, das geeignet ist eine Schaltnase eines Schaltbauteils des Befestigungsgehäuseteils zu führen, derart, dass in einer aus den Schaltbauteilen gebildeten Schalteinrichtung bei einer impulsförmigen Axialbewegung des Filterelements relativ auf das Befestigungsgehäuseteil die Schaltnase in der Schaltkulisse geführt ist und dadurch eine Drehbewegung des Filterelements relativ zum Befestigungsgehäuseteil um die Dreh-/Steckachse des Filters bewirkt wird, um das Rastmittel aus dem Einfuhr-/Ausfuhrbereich in den Schließbereich oder aus dem Rückhaltebereich in den Einfuhr-/Ausfuhrbereich zu bewegen, je nach Position des Rastmittels in der Aussparung vor Einwirkung der Axialbewegung. Die oben im Zusammenhang mit dem erfindungsgemäßen Filter aufgezählten Vorteile gelten für das Filterelement entsprechend.

Bei einer vorteilhaften Ausführungsform kann eine Ringdichtung an einer Stirnseite des Filterelements zur Abdichtung gegen das Filtergehäuse vorgesehen sein, die axial zum Filterelement verschiebbar ist. Auf diese Weise kann das Filterelement im Filtergehäuse schwimmend gelagert werden. Ferner kann die Montage und Demontage erleichtert werden, insbesondere wird bei der Demontage das Auslaufen von Fluid in die Umgebung verhindert. Die Ringdichtung kann einfach gemeinsam mit dem Filterelement ausgetauscht werden.

Vorteilhafterweise kann das Filterelement wenigstens ein Entriegelungselement aufweisen, das geeignet ist einen lösbaren Sperrmechanismus eines Teleskopschaltelements der Schalteinrichtung beim Einbau des Filterelements in das Befestigungsgehäuseteil zu deaktivieren. Die oben im Zusammenhang mit dem Entriegelungselement des erfindungsgemäßen Filters aufgezählten Vorteile gelten für das Filterelement entsprechend.

Im Übrigen wird die technische Aufgabe erfindungsgemäß dadurch gelöst, dass das Befestigungsgehäuseteil ein Schaltbauteil mit einer Schaltnase umfasst, das geeignet ist mit einer Schaltkulisse eines Schaltbauteils des Filterelements derart zusammenzuwirken, dass in einer mit den Schaltbauteilen gebildeten Schalteinrichtung bei einer impulsförmigen Axialbewegung des Filterelements relativ auf das Befestigungsgehäuseteil eine Drehbewegung des Filterelements relativ zum Befestigungsgehäuseteil um eine Dreh-/Steckachse des Filters bewirkt wird, zum Bewegen des Rastmittels aus dem Einfuhr-/Ausfuhrbereich in den Schließbereich oder aus dem Rückhaltebereich in den Einfuhr-/Ausfuhrbereich, je nach Position des Rastmittels in der Aussparung vor Einwirkung der Axialbewegung. Die oben im Zusammenhang mit dem erfindungsgemäßen Filter und dem Filterelement aufgezählten Vorteile gelten für das Befestigungsgehäuseteil entsprechend. Die Schalteinrichtung weist darüber hinaus wenigstens ein elastisches Element, insbesondere eine Spiraldruckfeder, auf zur Realisierung einer Vorspannung zwischen dem Befestigungsgehäuseteil und dem Filterelement.

Außerdem wird die technische Aufgabe erfindungsgemäß dadurch gelöst, dass das Teleskopschaltelement geeignet ist, mit dem Filterelement oder mit dem Befestigungsgehäuseteil verbunden zu werden, und das Teleskopschaltelement wenigstens eine sich radial zu einer Dreh-/Steckachse des Filters erstreckende Schaltnase umfasst, die geeignet ist, in einer Schaltkulisse, die entsprechend mit dem Filterelement verbunden ist, geführt zu werden, derart, dass die Schaltkulisse bei einer impulsförmigen Axialbewegung des Filterelements relativ auf das Befestigungsgehäuseteil zu die Schaltnase führt und dadurch eine Drehbewegung des Filterelements relativ zum Befestigungsgehäuseteil um die Dreh-/Steckachse bewirkt zur Betätigung der Rastverbindung. Zwischen dem Standzylinder und dem Tauchzylinder wirkt ein elastisches Element, das dazu ausgebildet ist, eine axial zur Dreh-/Steckachse wirkende Kraft zum Drücken der Schaltnasen gegen die Schaltkulisse einzubringen.

Die oben im Zusammenhang mit dem erfindungsgemäßen Filter, dem Filterelement und dem Befestigungsgehäuseteil aufgezählten Vorteile gelten hier entsprechend.

Vorteilhafterweise kann das Teleskopschaltelement einen lösbaren Sperrmechanismus aufweisen, der im Grundzustand aktiviert ist und das Zusammenschieben des Teleskopschaltelements blockiert, und der an ein Entriegelungselement, das entsprechend mit dem Befestigungsgehäuseteil oder mit dem Filterelement verbunden ist, angepasst ist, derart, dass das Entriegelungselement beim Einbau des Filterelements in das Befestigungsgehäuseteil den Sperrmechanismus deaktiviert.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch einen Längsschnitt eines Ölfilters mit einem austauschbaren Filterelement, das mit einer lösbaren Rastverbindung in einem Filtertopf befestigt ist, wobei die Rastverbindung mit einer Schalteinrichtung aktivierbar und deaktivierbar ist;
- Figur 2: schematisch eine Explosionszeichnung der Rastverbindung und der Schalteinrichtung des Ölfilters aus der Figur 1, bei der von unten nach oben eine Seitenansicht eines Tauchzylinders, eine Abwicklung der Geometrie einer Schalthülse der Schalteinrichtung, eine Abwicklung der Geometrie einer Rastkulisse und ein Längsschnitt einer Rastendscheibe des Filterelements mit drei Rastnasen gezeigt sind;
- Figur 3: eine isometrische Detailansicht der Rastendscheibe des Filterelements aus der Figur 2;
- Figur 4: eine isometrische Detailansicht des in Längsrichtung halbierten Filterelements aus den Figuren 1 bis 3 im Bereich einer Dichtungsendscheibe mit einer verschiebbaren Ringdichtung;
- Figur 5: eine isometrische Darstellung eines zweiten Ausführungsbeispiels eines Filterelements, welches zu dem Filterelement aus der Figur 1 ähnlich ist;
- Figur 6: eine isometrische Darstellung des in Längsrichtung halbierten Filterelements aus der Figur 5 im Bereich einer Rastendscheibe;
- Figur 7: schematisch einen Längsschnitt eines Ölfilters mit dem Filterelement gemäß dem zweiten Ausführungsbeispiel aus den Figuren 5 und 6 im Bereich der Rastverbindung und der Schalteinrichtung;
- Figur 8: schematisch eine isometrische Darstellung eines Tauchzylinders des Ölfilters aus der Figur 7;
- Figur 9: schematisch eine isometrische Darstellung eines dritten Ausführungsbeispiels eines Filterelements, welches zu den Filterelementen aus den Figuren 1 bis 7 ähnlich ist;
- Figur 10: schematisch eine isometrische Darstellung eines vierten Ausführungsbeispiels eines Filterelements, welches zu den Filterelementen aus den Figuren 1 bis 7 und 9 ähnlich ist;
- Figur 11: schematisch einen Längsschnitt eines zu dem Ölfiltern aus den Figur und 1 und 7 ähnlichen Ölfilters mit einer verschiebbaren Ringdichtung im Bereich der Verschraubung eines Gehäusetopfs mit einem Gehäusetopf;
- Figur 12: schematisch die Ringdichtung aus der Figur 11 im Querschnitt;
- Figur 13: schematisch einen Ausschnitt einer alternativen Rastkulisse, welche zu der Rastkulisse aus der Figur 2 ähnlich ist;
- Figur 14: schematisch eine isometrische Darstellung des Filtertopfs mit dem Filterelement des Ölfilters aus der Figur 1 in einem Montagezustand vor dem Verbinden mit dem Filterkopf;
- Figur 15: schematisch eine isometrische Darstellung des Filtertopfs mit dem Filterelement aus den Figuren 1 und 14 in einem Demontagezustand zum Abtropfen des Restöls;
- Figur 16: schematisch einen Längsschnitt eines Ölfilters mit einem Filterelement gemäß einem fünften Ausführungsbeispiel, welcher zu dem Ölfilter aus den Figuren 7 und 8 ähnlich ist, im Bereich einer Rastverbindung und einer Schalteinrichtung in einem ersten Montagezustand;
- Figur 17: schematisch der Ölfilter aus der Figur 16 im Endmontagezustand;
- Figur 18: der Ölfilter aus der Figur 16 im ersten Montagezustand im Teilschnitt;
- Figur 19: der Ölfilter aus der Figur 17 im Endmontagezustand im Teilschnitt;
- Figur 20: der Ölfilter aus der Figur 18 im ersten Montagezustand ohne Darstellung des Filterelements;
- Figur 21: der Ölfilter aus der Figur 19 im Endmontagezustand ohne Darstellung des Filterelements;
- Figur 22: eine Detailansicht der Schalteinrichtung des Ölfilters aus der Figur 16 im ersten Montagezustand;
- Figur 23: eine Detailansicht der Schalteinrichtung des Ölfilters aus der Figur 17 im Endmontagezustand;
- Figur 24: eine Detailansicht des Filterelements des Ölfilters aus der Figur 16;
- Figur 25: einen Standzylinder eines Teleskopschaltelements der Schalteinrichtung des Ölfilters aus der Figur 16;
- Figur 26: einen Tauchzylinder des Teleskopschaltelements der Schalteinrichtung des Ölfilters aus der Figur 16 mit Betrachtungsrichtung auf die Innenseite;
- Figur 27: der Tauchzylinder aus der Figur 27 mit Blick auf die Außenseite. In den Figuren sind gleiche Bauteile mit gleichen Bezugszeichen versehen.

### Ausführungsform(en) der Erfindung

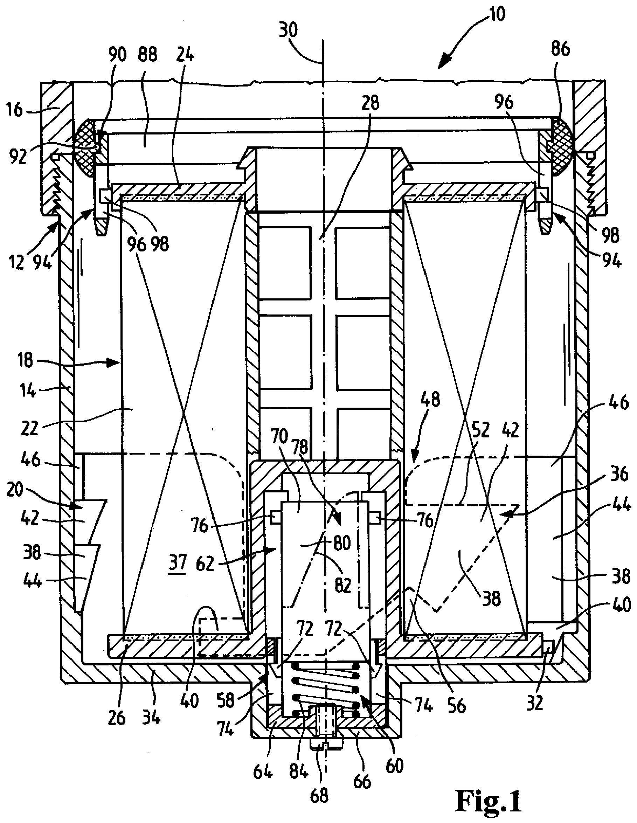

In Figur 1 ist ein Ölfilter 10 zur Filtrierung von Motoröl einer ansonsten nicht gezeigten Brennkraftmaschine eines Kraftfahrzeugs dargestellt.

Der Ölfilter 10 umfasst ein Filtergehäuse 12, das aus einem Filtertopf 14 und einem Filterkopf 16 zusammengesetzt ist. Der Filterkopf 16 ist in hier nicht weiter interessierender Weise mit einem nicht gezeigten Motorölsystem der Brennkraftmaschine verbunden. Der Filtertopf 14 ist von unten in den Filterkopf 16 eingeschraubt und hängt an diesem.

Ein austauschbares Filterelement 18 ist mittels einer lösbaren Rastverbindung 20 in dem Filtertopf 14, der als Befestigungsgehäuseteil wirkt, befestigt. Das Filterelement 18 umfasst ein Filtermedium 22, welches koaxial zu einer Dreh-/Steckachse 30 des Filtergehäuses 12 zickzackförmig gefaltet ist. An den Stirnseiten des Filtermediums 22 sind eine Dichtungsendscheibe 24 und eine Rastendscheibe 26 befestigt. Im Innenraum des Filtermediums 22 erstreckt sich zwischen der Dichtungsendscheibe 24 und der Rastendscheibe 26 ein in radialer Richtung fluiddurchlässiges Stützrohr 28 koaxial zur Dreh-/Steckachse 30.

Die Dreh-/Steckachse 30 ist die Achse, bezüglich der bei der Montage beziehungsweise Demontage des Ölfilters 10 die Dreh- und Steckbewegungen des Filterkopfs 16, des Filtertopfs 14 und des Filterelements 18 relativ zueinander erfolgen. Der Begriff Dreh-/Steckachse 30 wird im folgenden der besseren Übersichtlichkeit wegen auch für die einzelnen Komponenten des Ölfilters 10 bei geöffnetem Filtergehäuse 12 verwendet und ist in den Figuren entsprechend bezeichnet. In diesen Fällen versteht sich darunter die jeweilige Achse der entsprechenden Komponente, welche bei montiertem Ölfilter 10 mit der Dreh-/Steckachse 30 des Filtergehäuses 12 zusammenfällt. Die Begriffe "Radial", "axial" und "in Umfangsrichtung" beziehen sich auf die Dreh-/Steckachse 30 beziehungsweise die entsprechende Achse der jeweiligen Komponente.

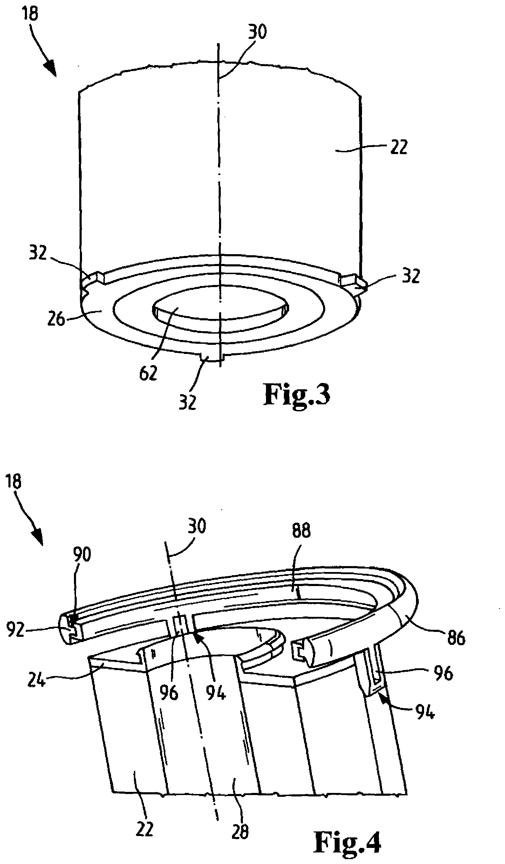

Die Rastverbindung 20 weist drei Rastnasen 32 als Rastmittel auf, die, wie insbesondere in der Figur 3 gezeigt, gleichmäßig verteilt an der Umfangsseite der einem Boden 34 des Filtertopfs 14 zugewandten Rastendscheibe 26 des Filterelements 18 angeordnet sind. Die Rastnasen 32 erstrecken sich radial nach außen. Die Rastnasen 32 wirken mit einer Rastkulisse 36 der Rastverbindung 20 zusammen.

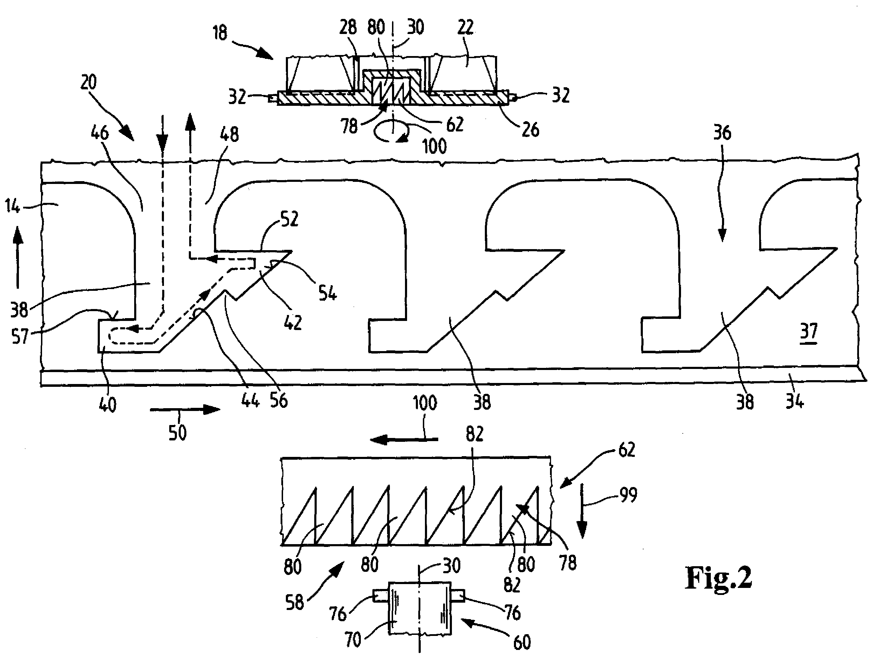

Die Rastkulisse 36 befindet sich in der Nähe des Bodens 34 an der radial inneren Umfangsseite des Filtertopfs 14. Die Rastkulisse 36 umfasst eine sich in radialer Richtung erstreckende Erhebung 37 mit drei jeweils mit einer der Rastnasen 32 korrespondierenden Aussparungen 38. In den Aussparungen 38 können sich die Rastnasen 32 bajonettartig verhaken. In der Figur 1 ist der Bereich der Rastkulisse 36, welcher eigentlich durch das Filterelement 18 verdeckt ist, zum besseren Verständnis gestrichelt angedeutet. Die Aussparungen 38 weisen, wie insbesondere in der Figur 2 gezeigt, jeweils einen Schließbereich 40, einen Rückhaltebereich 42, einen Translationsbereich 44 und einen Einfuhr-/Ausfuhrbereich 46 auf.

Der Einfuhr-/Ausfuhrbereich 46 erstreckt sich in axialer Richtung. An seinem der offenen Seite des Filtertopfs 14 zugewandten Ende weist der Einfuhr-/Ausfuhrbereich 46 eine Öffnung 48 auf. Die Öffnung 48 ist insgesamt etwa trichterartig geformt. Ihre Ränder sind abgerundet, so dass das Einführen der Rastnasen 32 vereinfacht wird. An seinem geschlossen Ende geht der Einfuhr-/Ausfuhrbereich 46 in den Schließbereich 40 über.

Der Schließbereich 40 erstreckt sich auf der bezüglich einer Schließdrehrichtung des Filtertopfs 14 hinteren Seite des Einfuhr-/Ausfuhrbereich 46 in Umfangsrichtung. Die Schließdrehrichtung ist in der Figur 2 angedeutet durch einen Pfeil 50.

Der Rückhaltebereich 42 befindet sich in axialer Richtung zwischen der Öffnung 48 des Einfuhr-/Ausfuhrbereich 46 und dem Schließbereich 40. Er erstreckt sich auf der bezüglich der Schließdrehrichtung 50 des Filtertopfs 14 vorderen Seite des Einfuhr-/Ausfuhrbereich 46 in Umfangsrichtung. Eine der Öffnung 48 zugewandte Halteseite 52 des Rückhaltebereichs 42 verläuft in einer Ebene senkrecht zur Dreh-/Steckachse 30. Eine gegenüberliegende Führungsseite 54 verläuft schräg auf die Halteseite 52 zu, so dass der Rückhaltebereich 42 insgesamt eine etwa dreieckige Form hat. Zwischen dem Einfuhr-/Ausfuhrbereich 46 und dem Rückhaltebereich 42 grenzt an die Führungsseite 54 ein dreieckiger Vorsprung 56 an, welcher sich in axialer Richtung vom Boden 34 weg erstreckt und spitz zuläuft. Der Vorsprung 56 bildet einen überwindbaren Anschlag für die Rastnase 32. Der Vorsprung 56 verhindert, dass das Filterelement 18 im Filtertopf 14 ungewollt so gedreht wird, das die Rastnase 32 in den Einfuhr-/Ausfuhrbereiche 46 gelangt, und die Rastverbindung 20 so gelöst wird.

Der axiale Abstand zwischen der Halteseite 52 des Rückhaltebereichs 42 und einer Schließhalteseite 57 auf der der Öffnung 48 zugewandten Seite des Schließbereichs 40 gibt vor, wie weit das Filterelement 18 in einer weiter unten beschriebenen Halteposition aus dem Filterkopf 14 ragt.

Der Translationsbereich 44 bildet das geschlossene Ende des Einfuhr-/Ausfuhrbereichs 46. Er erstreckt sich schräg zur Dreh-/Steckachse 30 des Filtertopfs 14 von der Schließhalteseite 57 des Schließbereichs 40 zum Vorsprung 56 des Rückhaltebereichs 42. Die Kontur des Translationsbereichs 44 geht in die Kontur des Vorsprungs 56 über.

Eine Schalteinrichtung 58 umfasst ein Teleskopschaltelement 60 am Filterkopf 14, das mit einer Schalthülse 62 am Filterelement 18 korrespondiert.

Das Teleskopschaltelement 60 verfügt über einen hohlen Standzylinder 64, der an einer Stirnseite offen und an der anderen Stirnseite geschlossen ist. An der geschlossenen Stirnseite ist der Standzylinder 64 mit einer Schraube 68 in einer Vertiefung 66 im Boden 34 des Filtertopfs 14 befestigt.

In dem Standzylinder 64 ist ein koaxialer Tauchzylinder 70 axial zur Dreh-/Steckachse 30 bewegbar. Der Tauchzylinder 70 ist ebenfalls hohl und an einer Stirnseite geschlossen. Die offene Stirnseite des Tauchzylinders 70 ist der geschlossenen Stirnseite des Standzylinders 64 zugewandt.

Der Tauchzylinder 70 weist an seiner offenen Stirnseite zwei Schnapphaken 72 auf, die sich in axialer Richtung erstrecken und deren Verrastungsseiten radial nach außen gerichtet sind. Die Schnapphaken 72 sind in zwei entsprechenden Führungsschlitzen 74 in der Umfangsseite des Standzylinders 64 geführt. Die Führungsschlitze 74 erstrecken sich axial zur Dreh-/Steckachse 30. Die Führungsschlitze 74 sind zu beiden Stirnseiten des Standzylinders 64 hin geschlossen. Der Tauchzylinder 70 wird mittels der Schnapphaken 72 verdrehsicher und axial verschiebbar im Standzylinder 64 gehalten.

Der Tauchzylinder 70 umfasst zwei Schaltnasen 76, die an der radial äußeren Umfangsseite angeordnet sind und sich radial nach außen erstrecken. Die Schaltnasen 76 sind nahe der geschlossenen Stirnseite des Tauchzylinders 70 auf bezüglich der Dreh-/Steckachse 30 diametral gegenüberliegenden Seiten angeordnet.

Die Schalthülse 62 ist eine zylindrische Vertiefung, die sich im Zentrum der Rastendscheibe 26 des Filterelements 18 in axialer Richtung zur Dichtungsendscheibe 24 hin erstreckt. Die Schalthülse 62 weist auf ihrer radial inneren Seite eine sich radial nach innen erhebende Schaltkulisse 78 auf. Die Schaltkulisse 78 umfasst in Umfangsrichtung eine Aufeinanderfolge von Fortschaltzähnen 80. In der Figur 1 ist der Bereich der Schaltkulisse 78, der in der dortigen Darstellung eigentlich von den Tauchzylinder 70 verdeckt ist, dem besseren Verständnis wegen strichgepunktet angedeutet. Jeder Fortschaltzahn 80 hat, wie insbesondere in der Figur 2 gezeigt, eine sich in axialer Richtung erstreckende Fläche und eine zu dieser schräg verlaufende Führungsfläche 82. Die Führungsflächen 82 befinden sich auf der der Öffnung der Schalthülse 62 zugewandten Seite der Schaltkulisse 78. Die Schaltkulisse 78 dient zur Führung der Schaltnasen 76 bei einer impulsförmigen relativen Axialbewegung des Filterelements 18 in den Filtertopf 14 hinein.

Im Inneren des Teleskopschaltelements 60 ist eine Spiraldruckfeder 84 koaxial zur Dreh-/Steckachse 30 angeordnet. Die Spiraldruckfeder 84 stützt sich mit einem Ende an einer Stirnwand des Standzylinders 64 und mit dem anderen Ende an einer Stirnwand des Tauchzylinders 70 ab. Die Spiraldruckfeder 84 des Teleskopschaltelements 60 dient zur Einbringung einer axial zur Dreh-/Steckachse 30 wirkenden Federkraft zum Drücken der Schaltnasen 76 gegen die Schaltkulisse 78.

An der Dichtungsendscheibe 24 des Filterelements 18 ist, wie in den Figuren 1 und 4 gezeigt, eine flexible Ringdichtung 86 zur Abdichtung gegen das Filtergehäuse 12 angeordnet. Die Ringdichtung 86 ist koaxial zur Dreh-/Steckachse 30 auf einem formstabilen Stützring 88 befestigt, der seinerseits axial zum Filterelement 18 verschiebbar ist. Die Ringdichtung 86 hat ein halbmondförmiges Profil, dessen gewölbte Seite radial außen ist. Die gerade axial innere Seite der Ringdichtung 86 liegt flächig an der radial äußeren Umfangsseite des Stützrings 88 an. In der radial äußeren Umfangsseite des Stützrings 88 befindet sich eine Umfangsnut 90, in der zum Halten der Ringdichtung 86 auf dem Stützring 88 ein entsprechender Vorsprung 92 eingreift, der sich an der radial inneren Seite der Ringdichtung 86 befindet.

An einer Stirnseite des Stützrings 88, die dem Filterelement 18 zugewandt ist, ist umfänglich verteilt eine Mehrzahl von Führungsrahmen 94 angeordnet. Die Führungsrahmen 94 weisen jeweils einen länglichen Führungsspalt 96 auf, welcher sich in axialer Richtung erstreckt. Die Führungsrahmen 94 laufen an ihren freien Enden zur Montageerleichterung spitz zu.

An der radial äußeren Umfangsseite der Dichtungsendscheibe 24 befinden sich Führungsvorsprünge 98, die mit den Führungsspalten 96 korrespondieren. Die Führungsvorsprünge 98 erstrecken sich radial nach außen. Die Führungsrahmen 94 werden auf den Führungsvorsprüngen 98 geführt.

Die Ausdehnung der Führungsvorsprünge 98 in Umfangsrichtung entspricht etwa der Ausdehnung der Führungsspalte 96 in Umfangsrichtung, so dass eine Relativbewegung zwischen dem Stützring 88 und der Dichtungsendscheibe 24 relativ zur Dreh-/Steckachse 30 verhindert wird.

Die Ausdehnung der Führungsspalte 96 in axialer Richtung ist deutlich größer als die Ausdehnung der Führungsvorsprünge 98 in axialer Richtung, so dass eine Relativbewegung des Stützrings 88 mit der Ringdichtung 86 in axialer Richtung relativ zum Filterelement 18 möglich ist.

Zur Montage des Ölfilters 10 wird das Filterelement 18 mit der Rastendscheibe 26 voran axial zur Dreh-/Steckachse 30 in den Filtertopf 14 gesteckt. Dabei ist es unter Umständen erforderlich, das Filterelement 18 im Filtertopf 14 etwas um die Dreh-/Steckachse 30 zu drehen, so dass die drei Rastnasen 32 widerstandsfrei jeweils in einen der Einfuhr-/Ausfuhrbereiche 46 der Rastkulisse 36 eingleiten können. Dies wird durch die trichterförmigen Öffnungen 48 mit den abgerundeten Rändern vereinfacht. Beim Einstecken des Filterelements 18 taucht der Tauchzylinder 70 in die Schalthülse 62 ein. Die Spiraldruckfeder 84 sorgt dafür, dass das Filterelement 18 nicht vollständig in dem Filtertopf 14 eintaucht. Das Filterelement 18 ragt in dieser Phase der Montage aus dem Filtertopf 14 heraus. Der Stützring 88 mit der Ringdichtung 86 befindet sich außerhalb des Filtertopfs 14.

Durch die in ihrer Geometrie aufeinander abgestimmten Paarungen der Rastnasen 32 mit den Aussparungen 38 der Rastkulisse 14 und der Paarung der Schaltnasen 76 des Tauchzylinders 70 mit der Schaltkulisse 78 der Schalthülse 62 wird verhindert, dass das Filterelement 18 falsch montiert oder ein nicht passendes Filterelement eingesetzt werden kann. Auf diese Weise wird das Risiko, dass Funktionsstörungen des Ölfilters 10 auftreten, reduziert.

Das Filterelement 18 wird zur Aktivierung der Rastverbindung 20 mit einer impulsförmigen Bewegung in axialer Richtung in den Filtertopf 14 hinein gedrückt. Die Bewegungsrichtung der Schaltkulisse 78 dabei ist in der Figur 2 mit einem Pfeil 99 angedeutet. Diese Axialbewegung kann durch Gegendrücken mit einer Hand oder durch Drücken des Filtertopfs 14 mit der freien Stirnseite des Filterelements 18 gegen eine Tischplatte oder einen andersartigen stabilen Gegenstand erzeugt werden. Bei der Axialbewegung werden die Schaltnasen 76 des Tauchzylinders 70 entlang der Führungsflächen 82 der Schaltkulisse 78 geführt, so dass eine Drehbewegung des Filterelements 18 relativ zum Filtertopf 14 um die Dreh-/Steckachse 30 bewirkt wird. Die Drehrichtung des Filterelements 18 dabei ist in der Figur 2 durch Pfeile 100 angedeutet. Durch die Drehbewegung des Filterelements 18 werden die Rastnasen 32 aus den Einfuhr-/Ausfuhrbereichen 46 der jeweiligen Aussparung 38 in die Schließbereiche 40 bewegt.

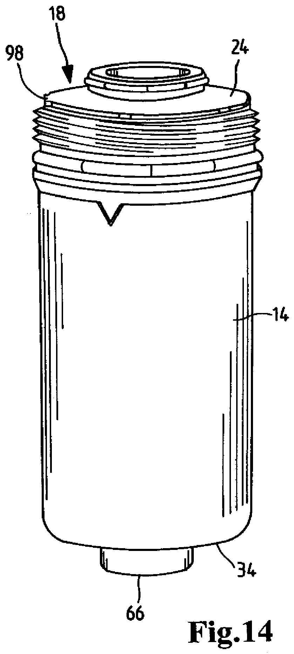

Die Schließbereiche 40 dienen zur Aufnahme der Rastnasen 32 während der Verschraubung des Filtertopfs 14 mit dem Filterkopf 16. In dieser Demontagephase drückt das Filterelement 18 gegen die Spiraldruckfeder 84, so dass diese vorgespannt wird. Die Ringdichtung 86 liegt am Rand des Filtertopfs 14 an. Der besseren Übersichtlichkeit halber wurde in der Figur 14 auf die Darstellung der Ringdichtung 86 verzichtet. Das Filterelement 18 wird durch die Rastverbindung 20 im Filtertopf 14 gehalten, so dass dieser zum zusammenführen mit dem Filterkopf 16 in alle Raumrichtungen gedreht oder gekippt werden kann, ohne dass das Filterelement 18 herausfällt. Auf diese Weise ist eine verdeckte Montage des Filtertopfs 14 am Filterkopf 16 einfach möglich.

Der Filtertopf 14 mit dem Filterelement 18 wird von unten in den Filterkopf 16 eingeschraubt. Dabei werden weiterhin die Rastnasen 32 in den Schließbereichen 40 gehalten. Die Ringdichtung 86 liegt in der in der Figur 1 gezeigten Einbauposition dicht an entsprechenden Dichtflächen an der Innenwand des Filterkopfs 16 an und trennt die Reinseite des Filterelements 18 von der Rohseite.

Zur Demontage wird der Filtertopf 14 in entgegengesetzter Drehrichtung aus dem Filterkopf 16 herausgeschraubt. Dabei wird über einen Reibungsschluss zwischen dem Filterelement 18, insbesondere der Ringdichtung 86, und dem Filterkopf 16 bewirkt, dass das Filterelement 18 etwas im Filtertopf 14 gedreht wird. Dabei bewegen sich die Rastnasen 32 aus den Schließbereichen 40 heraus in die jeweiligen Translationsbereiche 44. Beim weiteren Herausschrauben werden die Rastnasen 32 entlang der Translationsbereiche 44 in die Rückhaltebereiche 42 geführt. Durch die Relativbewegung des Filterelements 18 in axialer Richtung aus dem Filtertopf 14 heraus wird am Boden 34 des Filtertopfs 14 ein Volumen freigegeben, in welchem das Restöl aufgefangen wird, welches sich noch im Filtergehäuse 12 befindet. Auf diese Weise wird verhindert, dass Öl beim Austausch des Filterelements 18 aus dem Ölfilter 10 in die Umgebung gelangt.

Während der weiteren Öffnungsphase des Filtergehäuses 12 werden die Rastnasen 32 in den Rückhaltebereichen 42 gehalten. In dieser Rückhalteposition ragt das Filterelement 18 etwa 1 cm aus dem Filtertopf 14 heraus.

Außerdem wird während der Öffnungsphase die Ringdichtung 86 axial zur Dreh-/Steckachse 30 relativ zum Filterelement 18 verschoben. Die Ringdichtung 86 verbleibt beim Herausschrauben solange im Filterkopf 16, bis die Führungsvorsprünge 98 der Dichtungsendscheibe 24 an den Begrenzungen der Führungsspalte 96 an den freien Enden der Führungsrahmen 94 des Stützrings 88 anschlagen. So wird verhindert, dass das Öl in die Umgebung gelangt.

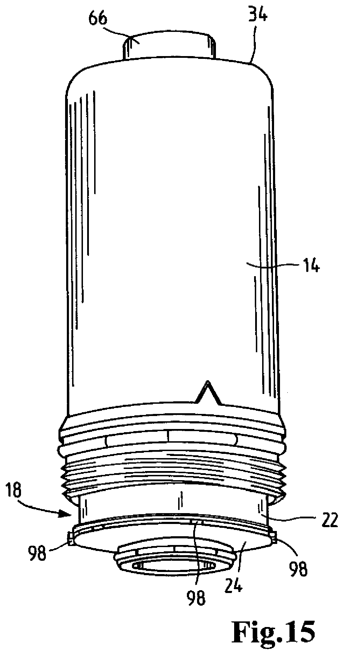

Der vollständig vom Filterkopf 16 getrennte Filtertopf 14 wird umgedreht, so dass seine offene Seite räumlich nach unten zeigt. Dabei wird das Filterelement 18 mit der Rastverbindung 20 im Filtertopf 14 gehalten, so dass es nicht unkontrolliert aus dem Filtertopf 14 heraus gefallen kann. Dieser Demontagezustand ist in der Figur 15 gezeigt. Auf die Darstellung der Ringdichtung 86 wurde der besseren Übersichtlichkeit wegen verzichtet. Der Filtertopf 14 kann zum Abtropfen des Öles beispielsweise mit der offenen Seite nach unten auf eine Abtropfwanne oder eine andersartige Unterlage gestellt werden.

Das Filterelement 18 wird mit einer impulsförmigen Bewegung in axialer Richtung in den Filtertopf 14 hinein gedrückt. Das kann beispielsweise durch Drücken mit einer Hand auf dem Boden 34 des Filtertopfs 14 geschehen, wobei die freie Stirnseite des Filterelements 18 gegen die Abtropfwanne gepresst wird. Dabei werden die Schaltnasen 76 des Tauchzylinders 70 entlang der Führungsflächen 82 der Schaltkulisse 78 geführt, so dass eine Drehbewegung des Filterelements 18 relativ zum Filtertopf 14 um die Dreh-/Steckachse 30 bewirkt wird.

Mit dieser Drehbewegung des Filterelements 18 werden die Rastnasen 32 zur Deaktivierung der Rastverbindung 20 aus den Rückhaltebereichen 42 in die Einfuhr-/Ausfuhrbereiche 46 bewegt. In den Einfuhr-/Ausfuhrbereichen 46 können die Rastnasen 32 und die Aussparungen 38 widerstandsfrei getrennt werden.

Nach der Deaktivierung der Rastverbindung 20 kann sich die Spiraldruckfeder 84 entspannen und bewirkt so, dass das Filterelement 18 in axialer Richtung aus dem Filtertopf 14 heraus gedrückt wird. Beim Anheben des Filtertopfs 14 verbleibt das Filterelement 18 auf der Abtropfwanne.

Insgesamt kann der Filtertopf 14 mit dem Filterelement 18 einfach einhändig auch an schwer zugänglichen und/oder verdeckten Stellen, beispielsweise in einem Motorraum, montiert werden. Ein gebrauchtes Filterelement 18 kann einfach einhändig ausgetauscht werden, wobei das ölverschmierte Filterelement 18 selbst nicht berührt werden muss.

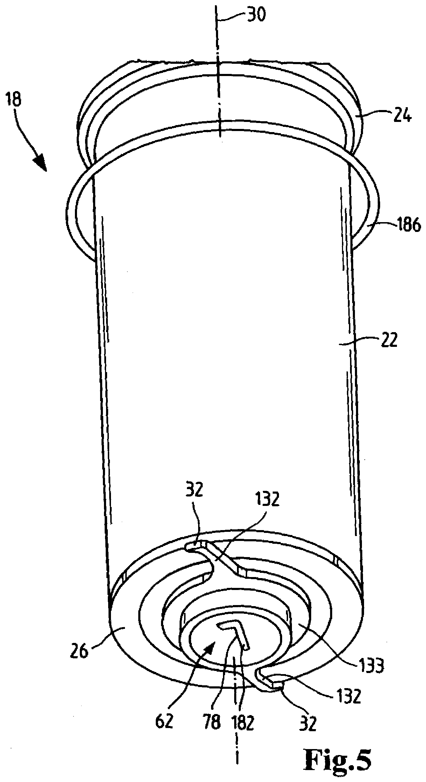

Bei einem zweiten Ausführungsbeispiel, dargestellt in den Figuren 5 bis 8, sind diejenigen Elemente, die zu denen des ersten, in den Figuren 1 bis 4 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von ersten dadurch, dass die Rastnasen 32 an den freien Enden von zwei bezüglich der Dreh-/Steckachse 30 diametral gegenüberliegenden Rastflügeln 132 angeordnet sind. Die Rastflügel 132 sind an einem Rastring 133 angeordnet, welcher koaxial zur Dreh-/Steckachse 30 an der dem Filtermedium 22 abgewandten Außenseite der Rastendscheibe 26 befestigt ist. Die Rastflügel 132 erstrecken sich im wesentlichen in radialer Richtung nach außen. Die freien Enden der Rastflügel 132 sind in die gleiche Umfangsrichtung gebogen und bilden die Rastnasen 32. Die Rastkulisse 36 ist ähnlich der Rastkulisse 36 aus dem ersten Ausführungsbeispiel aufgebaut.

Bei der Schaltkulisse 78 sind anstelle der Fortschaltzähne 80 wie beim ersten Ausführungsbeispiel beim zweiten Ausführungsbeispiel Schaltwinkel 182 vorgesehen.

Eine verschiebbare Ringdichtung 186 ist, wie in der Figur 5 gezeigt, beim zweiten Ausführungsbeispiel in axialer Richtung zwischen der Dichtungsendscheibe 24 und der Rastendscheibe 26 angeordnet. Die Ringdichtung 186 dichtet in der Einbauposition, welche in der Figur 5 nicht gezeigt ist, im Bereich der Dichtungsendscheibe 24 ab.

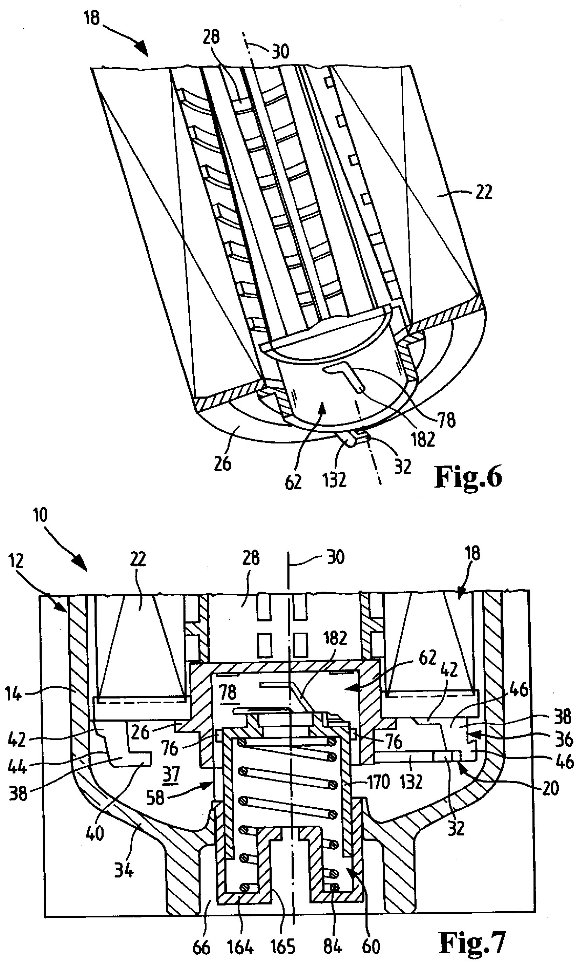

In der Figur 7 ist ein Ausschnitt der Rastkulisse 36 gezeigt, welche alternative Aussparungen 38 aufweist, die zu den Aussparungen 38 gemäß dem ersten Ausführungsbeispiel ähnlich sind.

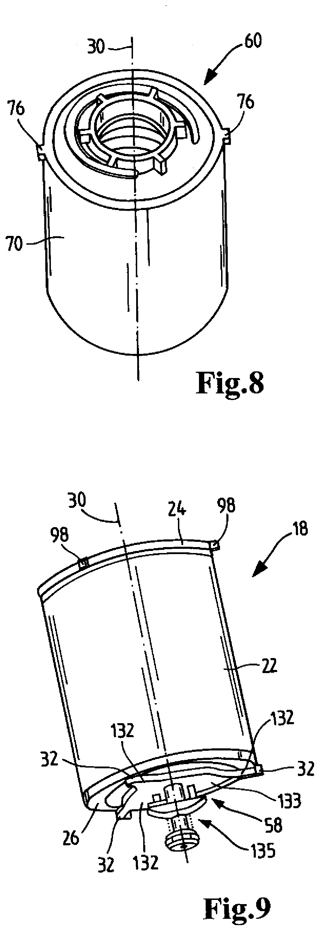

Der Standzylinder 164 des modularen Teleskopschaltelements 60 weist einen Mitteldom 165 auf zur Zentrierung der Spiraldruckfeder 84. Die Spiraldruckfeder 84 ist mit einem Ende in der Stirnwand des Tauchzylinders 170 eingebettet. Das Teleskopschaltelement 60 ist in der Figur 8 in isometrischer Darstellung gezeigt.

Bei einem Filterelement 18 gemäß einem dritten Ausführungsbeispiel, dargestellt in der Figur 9, sind diejenigen Elemente, die zu denen des ersten, in den Figuren 1 bis 4 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von ersten dadurch, dass ähnlich wie bei dem zweiten Ausführungsbeispiel drei Rastflügel 132 mit den Rastnasen 32 in Umfangsrichtung verteilt angeordnet sind, welche sich im wesentlichen in radialer Richtung nach außen erstrecken. Sie sind analog zu dem zweiten Ausführungsbeispiel an einem Rastring 133 angeordnet.

Darüber hinaus weist das dritte Ausführungsbeispiel eine alternative Schalteinrichtung 58 auf, welche mit einem hier nicht weiter interessierenden Ablaufventil 135 verbunden ist.

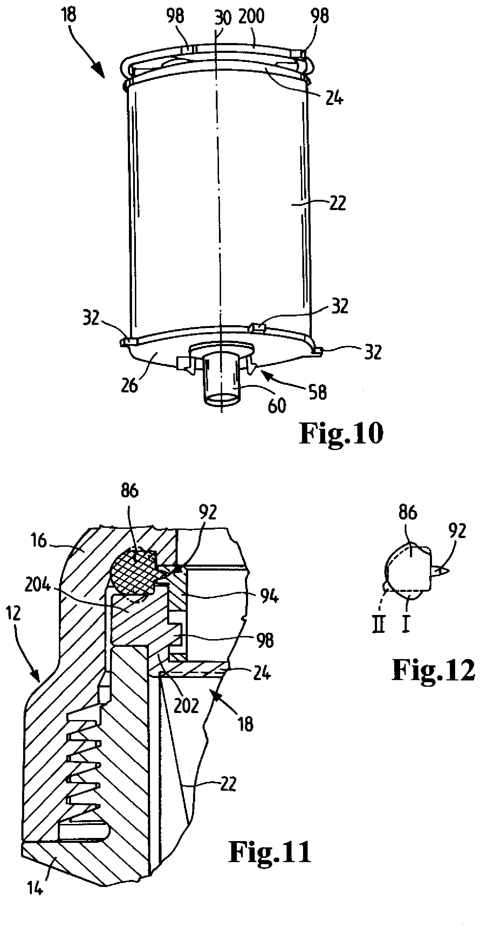

Bei einem Filterelement 18 gemäß einem vierten Ausführungsbeispiel, dargestellt in der Figur 10, sind anstelle der drei Rastnasen 32 des ersten Ausführungsbeispiels vier Rastnasen 32 vorgesehen. Dies wirkt sich positiv auf die Kraftverteilung beim Halten des Filterelements 18 im Filtertopf 14 aus. Ferner sind die Führungsvorsprünge 98 für die Führung des in der Figur 10 nicht gezeigten Stützrings für die verschiebbare Ringdichtung an einem zur Dreh-/Steckachse 30 koaxialen Führungsring 200 angeordnet. Der Führungsring 200 ist an der dem Filtermedium 22 abgewandten Außenseite der Dichtungsendscheibe 24 befestigt.

In der Figur 11 ist eine Detailansicht einer axial verschiebbaren Ringdichtung 86 mit halbmondförmigem Profil gemäß einem fünften Ausführungsbeispiel gezeigt. Die Ringdichtung 86 ist wie beim ersten Ausführungsbeispiel in den Figuren 1 bis 4 an einem Stützring 88 angeordnet. Im Unterschied zum ersten Ausführungsbeispiel befinden sich die Führungsvorsprünge 98 zum Führen der Führungsrahmen 94 des Stützrings 88 jedoch an der radial inneren Seite einer zylindrischen Wand 202 der Dichtungsendscheibe 24 des Filterelements 18. Die Dichtungsendscheibe 24 weist darüber hinaus einen sich radial nach außen erstreckenden Vorsprung 204 auf, welcher beim montiertem Filtergehäuse 12 mit einer Stirnseite an einem stirnseitigen Rand des Filtertopfs 14 anliegt. Zwischen der gegenüberliegenden Stirnseite des Vorsprungs 204 und einem entsprechenden stirnseitigen Rand des Filterkopfs 16 ist die Ringdichtung 86 angeordnet. In der Figur 12 ist die Ringdichtung 86 aus der Figur 11 in entspanntem Zustand (I) und in gequetschtem Zustand (II), wie er bei montiertem Filtergehäuse 12 vorliegt, gezeigt.

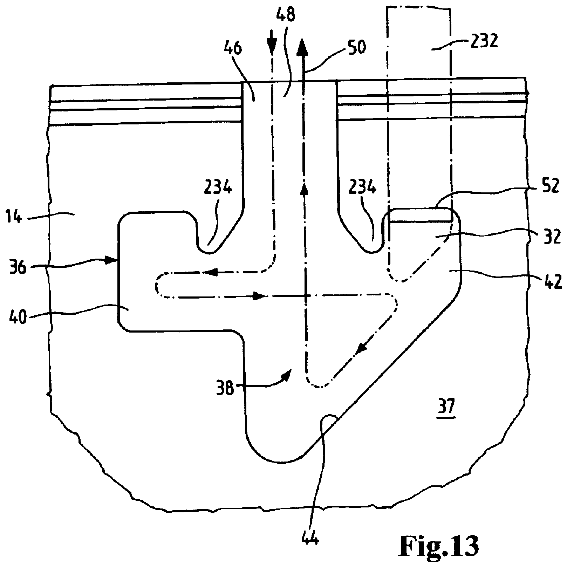

In der Figur 13 ist eine alternative Aussparung 38 einer Schaltkulisse 78 gezeigt, welche zu der Schaltkulisse 78 aus dem ersten Ausführungsbeispiel gemäß den Figuren 1 und 4 ähnlich ist. Hier ist ein Rasthaken 232 gestrichelt angedeutet, der an seinem freien Ende die Rastnase 32 aufweist. Im Unterschied zum ersten Ausführungsbeispiel verfügen der Rückhaltebereichen 42 und der Schließbereich 40 jeweils an ihrem dem Einfuhr-/Ausfuhrbereich 46 zugewandten Ende auf der der Öffnung 48 zugewandten Seite je über einen Vorsprung 234, der sich in axialer Richtung erstreckt. Die Vorsprünge 234 sichern die Rastnasen 32 vor ungewolltem Eindrehen in den Einfuhr-/Ausfuhrbereich 46 und somit vor ungewollter Deaktivierung der Rastverbindung 20.

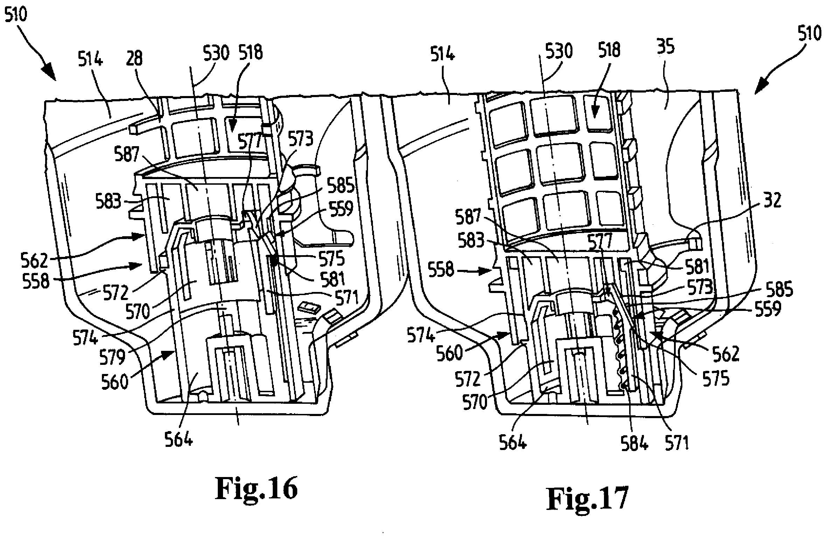

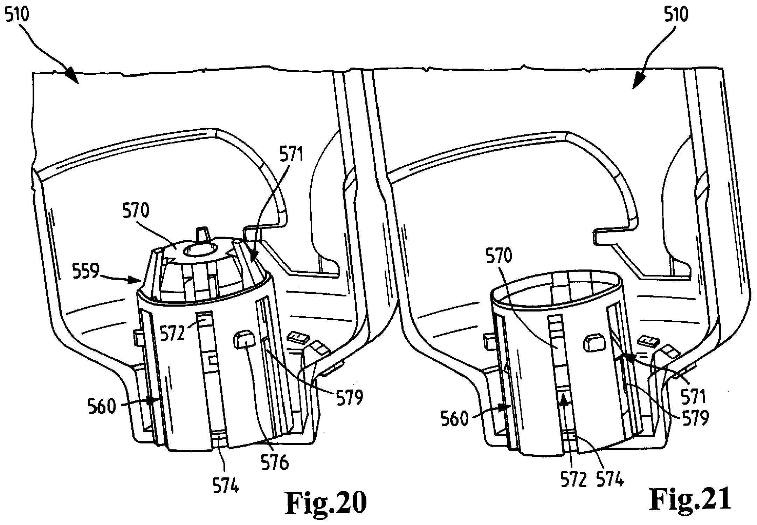

Bei einem fünften Ausführungsbeispiel, dargestellt in den Figuren 16 bis 27, wird bezüglich derjenigen Elemente, die zu denen des ersten, in den Figuren 1 bis 4 beschriebenen Ausführungsbeispiels und denen des zweiten, in den Figuren 5 bis 8 beschriebenen Ausführungsbeispiels ähnlich sind, auf die Ausführungen zum ersten beziehungsweise zweiten Ausführungsbeispiel Bezug genommen. Die Figuren 16, 18, 20 und 22 zeigen einen ersten Montagezustand beim Einbau des Filterelements 518 in den Filtertopf 514. Die Figuren 17, 19, 21 und 23 zeigen einen Endmontagezustand des Filterelements 518 im Filtertopf 514. Auf die Darstellung des Filtermediums auf dem Stützrohr 28 wurde in den Figuren 16 bis 27 der besseren Übersichtlichkeit wegen verzichtet. In den Figuren 20 und 21 wurde auf die Darstellung des Filterelements 518 zu Gunsten der Verdeutlichung des Teleskopschaltelements 560 verzichtet.

Das fünfte Ausführungsbeispiel unterscheidet sich von dem ersten und dem zweiten Ausführungsbeispiel dadurch, dass die Schalteinrichtung 558 einen Sperrmechanismus 559 aufweist, der im Grundzustand des Teleskopschaltelements 560 aktiviert ist und das Zusammenschieben des Teleskopschaltelements 560 blockiert.

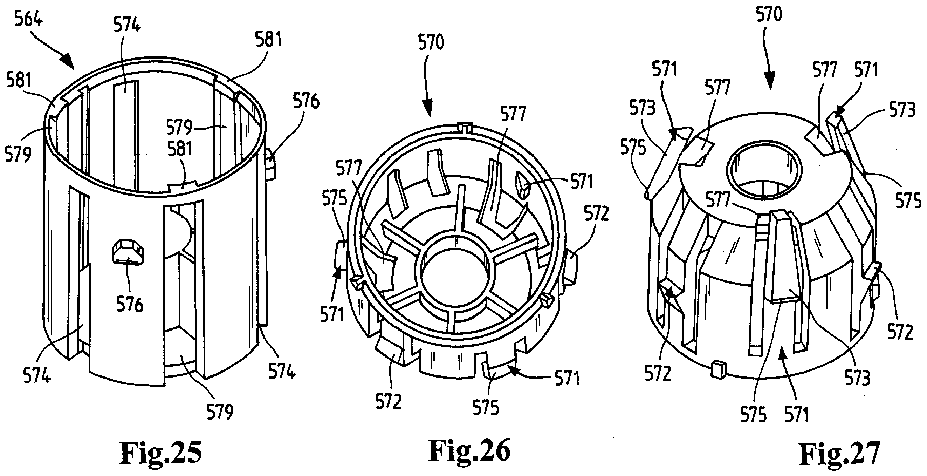

Der Tauchzylinder 570 des Teleskopschaltelements 560 ist, wie insbesondere in der Figur 27 gezeigt, an seiner geschlossenen, dem Standzylinder 564 abgewandten Stirnseite konisch geformt. Der besseren Übersichtlichkeit wegen ist die Spiraldruckfeder 584, welche im Grundzustand des Teleskopschaltelements 560 den Tauchzylinder 570 von dem Standzylinder 564 weg drückt, lediglich in der Figur 17 angedeutet.

Drei radial federnde Sperrschnapphaken 571 des Sperrmechanismus 559 sind bezüglich der Dreh-/Steckachse 530 symmetrisch verteilt in axialen Aussparungen in der Umfangswand des Tauchzylinders 570 angeordnet. Sie erstrecken sich in axialer Richtung. Ihre freien Enden befinden sich an der geschlossenen Stirnseite des Tauchzylinders 570 und überragen diese in axialer Richtung. Die freien Enden der Sperrschnapphaken 571 sind zu Rastabsätzen 573 geformt, die sich radial nach außen erheben. Im Bereich der Rastabsätze 573 sind die Sperrschnapphaken 571 radial nach innen gebogen.

Die Rastabsätze 573 überragen in radialer Richtung den konischen Bereich des Tauchzylinders 570. Auf ihren den freien Enden der Sperrschnapphaken 571 abgewandten Seiten weisen die Rastabsätze 573 Sperrstufen 575 auf. Die Sperrstufen 575 überragen den zylindrischen Abschnitt der Umfangswand des Tauchzylinders 570 in radialer Richtung.

Die Stirnwand an der geschlossenen Stirnseite des Tauchzylinders 570 weist umfangsseitig drei Einbuchtungen 577 auf, die in die Aussparungen übergehen, in denen sich die Sperrschnapphaken 571 befinden. In die Einbuchtungen 577 können die Sperrschnapphaken 571 in radialer Richtung einfedern, so dass die radial äußeren Seiten der Rastabsätze 573 in radialer Richtung auf Höhe der radial äußeren Seite des zylindrischen Abschnitts der Umfangswand des Tauchzylinders 570 oder sogar radial innerhalb von dieser liegen.

Jeweils zwischen zwei der Sperrschnapphaken 571 ist an der radial äußeren Seite des zylindrischen Abschnitts der Umfangswand des Tauchzylinders 570 einer von insgesamt drei Schnapphaken 572 angeordnet. Die Schnapphaken 572 werden in drei entsprechenden Führungsschlitzen 574 in der Umfangswand des Standzylinders 564 geführt, der insbesondere in der Figur 25 gezeigt ist. Die Führungsschlitze 574 erstrecken sich axial zur Dreh-/Steckachse 530.

Der Standzylinder 564 weist in seiner Umfangswand jeweils zwischen zwei der Führungsschlitze 574 einen von insgesamt drei Sperrführungsschlitzen 579 auf, in denen die Rastabsätze 573 der Sperrschnapphaken 571 des Tauchzylinders 570 geführt werden. Die Sperrführungsschlitze 579 erstrecken sich axial zur Dreh-/Steckachse 530.

Der Rand an der offenen Stirnseite des Standzylinders 564 ist an der radial inneren Seite, ausgenommen den Bereichen, in denen die Sperrführungsschlitze 579 angrenzen, abgeschrägt. Auf diese Weise können beim Zusammenbau des Teleskopschaltelements 560 die Schnapphaken 572 einfacher in die Führungsschlitze 574 eingleiten. Im Bereich der Sperrführungsschlitze 579 ist der Rand des Standzylinders 564 zu Sperranschlägen 581 für die Sperrstufen 575 der Sperrschnapphaken 571 geformt.

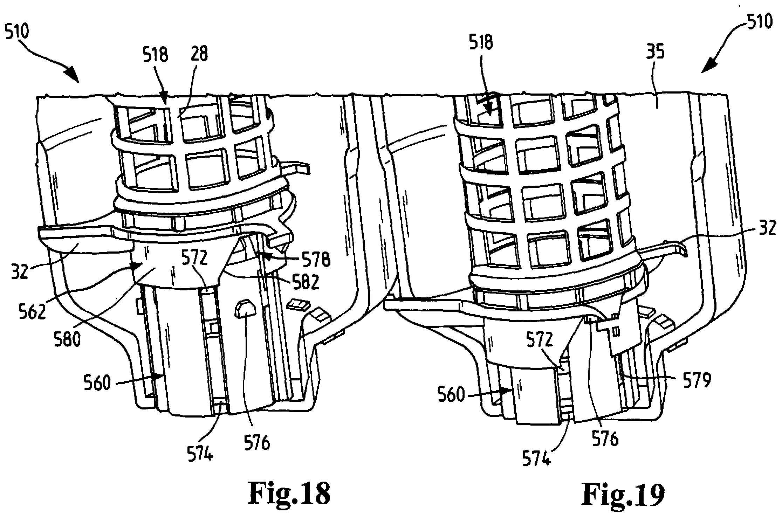

Jeweils zwischen einem der Führungsschlitze 574 und einem der Sperrführungsschlitze 579 ist an der radial äußeren Seite der Umfangswand des Standzylinders 564 eine Schaltnase 576 angeordnet, die sich radial nach außen erstrecken. Die Schaltnasen 576 sind etwa quaderförmig, wobei zwei Ecken, die beim Einbau des Filterelements 518 an einer insbesondere in den Figuren 18 und 19 gezeigten Führungsfläche 582 der Schaltkulisse 578 der Schalthülse 562 anliegen, angeschrägt ist.

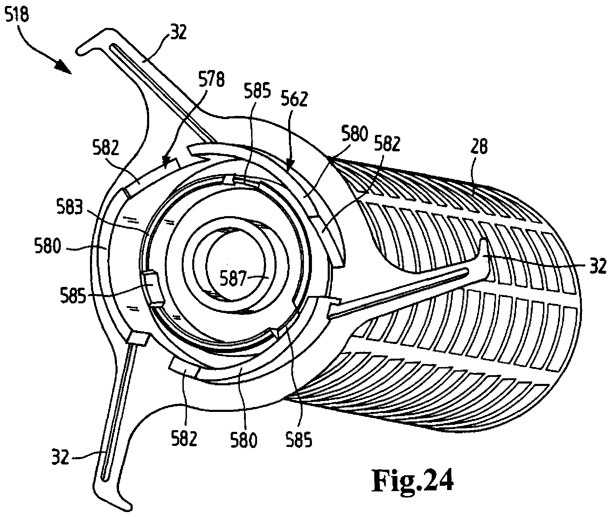

Am Filterelement 518 ist eine Entriegelungshülse 583, wie insbesondere in der Figur 24 gezeigt, koaxial innerhalb Schalthülse 562 angeordnet. Die Entriegelungshülse 583 ist zur Deaktivierung des Sperrmechanismus 559 an die Geometrie der Sperrschnapphaken 571 des Tauchzylinders 570 angepasst. Am Rand der offenen Stirnseite der Entriegelungshülse 583 ist der Radius ihrer radial inneren Umfangsseite größer als der Abstand zwischen der radial äußeren Seite der Rastabsätze 573 am freien Ende der Sperrschnapphaken 571 und der Dreh-/Steckachse 530. Auf diese Weise kann die Entriegelungshülse 583 beim Einstecken des Teleskopschaltelements 560 in die Schalthülse 562 radial von außen gegen die Rastabsätze 573 drücken und die Sperrschnapphaken 571 radial nach innen biegen. Die Sperrstufen 575 werden dabei weg von den Sperranschlägen 581 des Standzylinders 564 radial nach innen geschoben, so dass der Sperrmechanismus 559 deaktiviert wird und das Teleskopschaltelement 560 zusammen geschoben werden kann.

Im Fall, dass versucht wird ein Filterelement ohne die zu dem Teleskopschaltelement 560 passende Entriegelungshülse 583 in den Filtertopf 514 einzubauen, bleibt der Sperrmechanismus 559 aktiviert, so dass das Teleskopschaltelement 560 nicht zusammen geschoben werden kann. Das ausgefahrene Teleskopschaltelement 560 verhindert den Einbau des nicht passenden Filterelements, was deutlich von außen erkennbar ist. Auf diese Weise werden Einschränkungen und/oder Störungen der Filterfunktion des Ölfilters 510, welche durch die Verwendung eines nicht passenden Filterelements hervorgerufen werden können, verhindert.

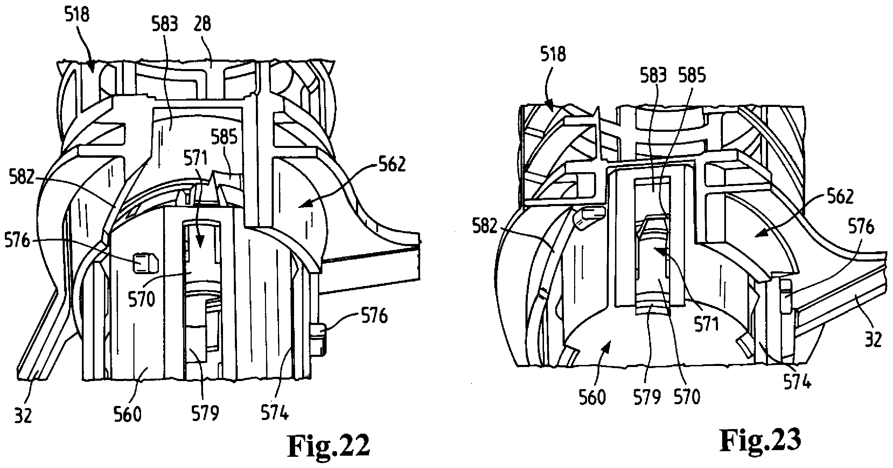

Die Entriegelungshülse 583 weist an ihrer freien Stirnseite drei Einkerbungen 585 auf, die in Umfangsrichtung in gleichmäßigen Abständen den Rand der Entriegelungshülse 583 unterbrechen. Die Einkerbungen 585 erstrecken sich in axialer Richtung. Die in axialer Richtung vom Rand der Entriegelungshülse 583 betrachtet hinteren Seiten der Einkerbungen 585 gehen jeweils in eine Schräge über, die sich auf der radial inneren Umfangsseite der Entriegelungshülse 583 befinden. Die Einkerbungen 585 sind in Umfangsrichtung bezüglich der Führungsflächen 582 der Schaltkulisse 578 der Schalthülse 562 so angeordnet, dass die eingefederten Sperrschnapphaken 571 im Endmontagezustand, wie in der Figur 23 gezeigt, in die Einkerbungen 585 eintauchen und so entspannen können. Auf diese Weise wird die mechanische Belastung der Sperrschnapphaken 571 verringert und deren Lebensdauer vergrößert.

Die Schaltkulisse 578 mit dem Fortschaltzähnen 580 ist in Form von Durchbrüchen in der Schalthülse 562 realisiert.

Innerhalb der Entriegelungshülse 583 befindet sich ein koaxialer Anschlagzylinder 587, der in axialer Richtung von der Entriegelungshülse 583 überragt wird. Beim Einschieben des Teleskopschaltelements 560 in die Schalthülse 562 stößt der Tauchzylinder 570 mit seiner geschlossenen Stirnseite gegen den Anschlagzylinder 587 und drückt so den Tauchzylinder 570 in den Standzylinder 564.

Die Aktivierung und die Deaktivierung der Rastverbindung 20, welche die Rastflügeln 32 und die Rastkulisse 36 aufweist, mit der Schalteinrichtung 558 funktioniert analog zu den oben erläuterten Ausführungsbeispielen.

Bei allen oben beschriebenen Ausführungsbeispielen eines Ölfilters 10, eines Filterelements 18; 518 und eines Filtertopfs 14; 514 sind unter anderem folgende Modifikationen möglich:

Die Erfindung ist nicht beschränkt auf Ölfilter 10 von Brennkraftmaschinen bei Kraftfahrzeugen.

Vielmehr kann sie auch bei andersartigen Filtern, beispielsweise Kraftstofffiltern oder Luftfiltern, von Brennkraftmaschinen, Industriemotoren oder Kompressoren verwendet werden. Ein erfindungsgemäßer Filter kann auch in anderen technischen Einsatzbereichen Verwendung finden.

Das Filtermedium 22 kann statt zickzackförmig auch andersartig gefaltet oder geformt sein.

Das Filtergehäuse 12 kann auch aus mehr als zwei Gehäuseteilen bestehen.

Der Filtertopf 14; 514 kann statt hängend auch schräg oder stehend von oben an dem Filterkopf 16 montiert sein. Anstelle des Filterkopfs 16 kann auch ein andersartiges Gehäuseteil zur Befestigung des Filterelements 18; 518 vorgesehen sein. Der Filtertopf 14; 514 kann statt in den Filterkopf 16 ein- oder aufgeschraubt auch mittels einer anderen Dreh- und/oder Steckverbindung, beispielsweise einer Bajonettverbindung, lösbar mit diesem verbunden sein.

Anstelle der Rastnasen 32 können auch andersartige Rastmittel vorgesehen sein. Entsprechende Rastmittel können statt mit dem Filterelement 18; 518 auch mit dem Filtertopf 14; 514 verbunden sein, entsprechend ist dann die Rastkulisse am Filterelement 18; 518 angeordnet.

Das Teleskopschaltelement 60; 560 oder eine entsprechende andersartigen Schalteinrichtung kann statt mit dem Filtertopf 14; 514 auch mit dem Filterelement 18; 118 verbunden sein. Entsprechend kann dann die Schaltkulisse 78 am Filtertopf 14; 514 angeordnet sein.

Die Schalteinrichtung 58; 518 kann auch mehr oder weniger als zwei beziehungsweise drei Schaltnasen 76; 576 aufweisen.

Die Schalteinrichtung kann auch an einer Umfangsseite des Filterelements und die Rasteinrichtung kann stattdessen im Zentrum der Rastendscheibe des Filterelements angeordnet sein.

Anstelle der Spiraldruckfeder 84; 584 kann auch ein andersartiges elastisches Element, beispielsweise eine Blattfeder oder ein elastisches Kunststoffelement, vorgesehen sein, welches geeignet ist, eine Rückstellkraft zu realisieren.

Das Filterelement 18; 118 kann in der Demontagephase, in der die Rastnasen 32; 532 in den Rückhaltebereichen 42 gehalten werden, auch mehr oder weniger als 1 cm aus dem Filtertopf 14; 514 herausragen.

Die Halteseite 52 des Rückhaltebereichs 42 und die Schließhalteseite 57 des Schließbereich 40 können auch in einer Ebene senkrecht zur Dreh-/Steckachse 30; 530 verlaufen.

Wenn die der Schließhalteseite 57 des Schließbereichs 40 und der Halteseite 52 des Rückhaltebereichs 42 jeweils gegenüberliegenden Seiten in einer gemeinsamen Ebene senkrecht zur Dreh-/Steckachse 30; 35 verlaufen, kann der Translationsbereich 44 ebenfalls in dieser Ebene verlaufen.

Die Rastverbindung und die Schalteinrichtung können auch kombiniert sein. Insbesondere kann die Rastverbindung so ausgestaltet sein, dass die Funktionen der Schalteinrichtung realisiert und umgekehrt.

Der Sperrmechanismus 559 für das Teleskopschaltelement 560 und/oder das Entriegelungselement 583 können auch andersartig aneinander angepasst ausgestaltet sein.

## Patentansprüche

1. Filter (10) zur Filtrierung von Fluiden, insbesondere Kraftstoff oder Öl, insbesondere eines Kraftfahrzeugs, umfassend ein Filtergehäuse (12), das aus wenigstens zwei Gehäuseteilen (14, 16; 514) besteht, und ein Filterelement (18; 518), das mittels einer lösbaren Rastverbindung (20) in einem der Gehäuseteile, das als Befestigungsgehäuseteil (14; 14) für das Filterelement (18; 518) wirkt, befestigt ist, wobei die Rastverbindung (20) wenigstens zwei zusammenwirkende Rastbauteile (32, 36) aufweist, und eines der Rastbauteile (32) mit dem Filterelement (18; 518) und eines der Rastbauteile (36) mit dem Befestigungsgehäuseteil (14; 514) verbunden ist, und wenigstens eines der Rastbauteile wenigstens ein Rastmittel (32) umfasst und eines der Rastbauteile (36) eine mit dem Rastmittel (32) korrespondierende Aussparung (38), in der sich das Rastmittel (32) bajonettartig verhakt, umfasst, und die Aussparung (38) folgende Bereiche aufweist:
- einen Schließbereich (40) zur Aufnahme des Rastmittels (32) während der Verbindung der Gehäuseteile (14, 16; 514),
- einen Rückhaltebereich (42) zur Aufnahme des Rastmittels (32) während der Öffnung des Filtergehäuses (12),
- einen Translationsbereich (44) zur Lösung des Rastmittels (32) in der Aussparung (38) und
- einen Einfuhr-/Ausfuhrbereich (46) zum widerstandsfreien Zusammenfügen und Trennen von Rastmittel (32) und Aussparung (38),
**dadurch gekennzeichnet, dass**
der Filter (10) eine Schalteinrichtung (58; 558) aufweist, die wenigstens zwei korrespondierende Schaltbauteile (60, 78; 560) umfasst, wobei eines der Schaltbauteile (60; 560) mit dem Filterelement (18; 518) und eines der Schaltbauteile (62; 562) mit dem Befestigungsgehäuseteil (14; 514) verbunden ist, und eines der Schaltbauteile (60; 560) wenigstens eine sich radial zu einer Dreh-/Steckachse (30; 530) des Filters (10) erstreckende Schaltnase (76; 576) und eines der Schaltbauteile (62; 562) eine Schaltkulisse (78; 578) zur Führung der Schaltnase (76; 576) umfasst, derart, dass die Schaltkulisse (78; 578) bei einer impulsförmigen Axialbewegung des Filterelements (18; 518) relativ auf das Befestigungsgehäuseteil (14; 514) die Schaltnase (76; 576) führt und dadurch eine Drehbewegung des Filterelements (18; 518) relativ zum Befestigungsgehäuseteil (14; 114) um die Dreh-/Steckachse (30; 530) zum Bewegen des Rastmittels (32) aus dem Einfuhr-/Ausfuhrbereich (46) in den Schließbereich (40) bewirkt oder aus dem Rückhaltebereich (42) in den Einfuhr-/Ausfuhrbereich (46), je nach Position des Rastmittels (32) in der Aussparung (38) vor Einwirkung der Axialbewegung,
wobei die Schalteinrichtung (58; 558) wenigstens ein elastisches Element, insbesondere eine Spiraldruckfeder (84; 584), aufweist zur Realisierung einer Vorspannung zwischen dem Befestigungsgehäuseteil (14; 514) und dem Filterelement (18; 518).

2. Filter nach Anspruch 1, **dadurch gekennzeichnet, dass** die Schaltkulisse (78; 578) als Schalthülse (62; 562) realisiert ist, die in Umfangsrichtung eine Aufeinanderfolge von Fortschaltzähnen (80; 580) oder Führungswinkeln (182) aufweist.

3. Filter nach Anspruch 1 oder 2, **dadurch gekennzeichnet, dass** eines der Schaltbauteile ein Teleskopschaltelement (60; 560) aufweist mit einem Standzylinder (64; 164; 264) und einem Tauchzylinder (70; 170; 270), zwischen denen das elastische Element (84; 584) wirkt und die zur Einbringung des Filterelements (18; 518) in das Befestigungsgehäuseteil (14; 514) unter Realisierung einer Vorspannung des elastischen Elementes (84; 584) ineinander geschoben werden können.

4. Filter nach Anspruch 3, **dadurch gekennzeichnet, dass** das Teleskopschaltelement (560) einen lösbaren Sperrmechanismus (559) aufweist, der im Grundzustand aktiviert ist und das Zusammenschieben des Teleskopschaltelements (560) blockiert, und das andere Schaltbauteil (562) wenigstens ein Entriegelungselement (583) aufweist, das an den Sperrmechanismus (559) angepasst ist, derart, dass das Entriegelungselement (583) beim Zusammenfügen des Teleskopschaltelements (560) und des anderen Schaltbauteils (562) den Sperrmechanismus (559) deaktiviert.

5. Filter nach einem der vorigen Ansprüche, **dadurch gekennzeichnet, dass** insbesondere an einer Stirnseite des Filterelements (18) eine Ringdichtung (86; 186) zur Abdichtung gegen das Filtergehäuse (12) befestigt ist, die axial zur Dreh-/Steckachse (30) relativ zum Filterelement (18) verschiebbar ist.

6. Filterelement (18; 518) eines Filters (10), insbesondere nach einem der vorigen Ansprüche, das ein Rastbauteil (32) aufweist, das geeignet ist, mit einem Rastbauteil (36), welches mit einem Befestigungsgehäuseteil (14) eines Filtergehäuses (12) verbunden ist, eine lösbare Rastverbindung (20) zu bilden, wobei eines der Rastbauteile wenigstens ein Rastmittel (32) umfasst und eines der Rastbauteile (36) eine mit dem Rastmittel (32) korrespondierende Aussparung (38), in dem sich das Rastmittel (32) bajonettartig verhakt, umfasst, wobei die Aussparung (38) einen Schließbereich (40), einen Rückhaltebereich (42), einen Translationsbereich (44) und einen Einfuhr-/Ausfuhrbereich (46) aufweist, **dadurch gekennzeichnet, dass**
das Filterelement (18; 518) ein Schaltbauteil (62; 562) mit einer Schaltkulisse (78; 578) umfasst, das geeignet ist eine Schaltnase (76; 576) eines Schaltbauteils (60; 560) des Befestigungsgehäuseteils (14; 514) zu führen, derart, dass in einer mit den Schaltbauteilen (60, 62; 562, 562) gebildeten Schalteinrichtung (58; 558) bei einer impulsförmigen Axialbewegung des Filterelements (18; 518) relativ auf das Befestigungsgehäuseteil (14; 514) die Schaltnase (76; 576) in der Schaltkulisse (78; 578) geführt ist und dadurch eine Drehbewegung des Filterelements (18; 518) relativ zum Befestigungsgehäuseteil (14; 514) um die Dreh-/Steckachse (30; 530) zum Bewegen des Rastmittels (32) aus dem Einfuhr-/Ausfuhrbereich (46) in den Schließbereich (40) oder aus dem Rückhaltebereich (42) in den Einfuhr-/Ausfuhrbereich (46) bewirkt wird, je nach Position des Rastmittels (32) in der Aussparung (38)vor Einwirkung der Axialbewegung.

7. Filterelement nach Anspruch 6, **gekennzeichnet durch** eine Ringdichtung (86; 186) an einer Stirnseite des Filterelements (18) zur Abdichtung gegen das Filtergehäuse (12), die axial zum Filterelement (18) verschiebbar ist.

8. Filterelement nach Anspruch 6 oder 7, **dadurch gekennzeichnet, dass** es wenigstens ein Entriegelungselement (583) aufweist, das geeignet ist einen lösbaren Sperrmechanismus (559) eines Teleskopschaltelements (560) der Schalteinrichtung (558) beim Einbau des Filterelements (518) in das Befestigungsgehäuseteil (514) zu deaktivieren.

9. Befestigungsgehäuseteil (14; 514) eines Filtergehäuses (12) eines Filters (10), insbesondere nach einem der vorigen Ansprüche, das ein Rastbauteil (36) aufweist, das mit einem Rastbauteil (32), welches geeignet ist, mit einem Filterelement (18; 518) des Filters (10) verbunden ist, eine lösbare Rastverbindung (20) zu bilden, wobei wenigstens eines der Rastbauteile wenigstens ein Rastmittel (32) und eines der Rastbauteile (36) eine mit dem Rastmittel (32) korrespondierende Aussparung (38), in dem sich das Rastmittel (32) bajonettartig verhakt, umfasst, wobei die Aussparung (38) einen Schließbereich (40), einen Rückhaltebereich (42), einen Translationsbereich (44) und einen Einfuhr-/Ausfuhrbereich (46) aufweist,
**dadurch gekennzeichnet, dass**
das Befestigungsgehäuseteil (14; 514) ein Schaltbauteil (60; 560) mit einer Schaltnase (76; 576) umfasst, das geeignet ist mit einer Schaltkulisse (78; 578) eines Schaltbauteils (62; 562) des Filterelements (18; 518) derart zusammenzuwirken, dass eine aus den Schaltbauteilen (60, 62; 560, 562) gebildete Schalteinrichtung (58; 558) bei einer impulsförmigen
Axialbewegung des Filterelements (18; 518) relativ auf das Befestigungsgehäuseteil (14; 514) die Schaltnase (76; 576) führt und dadurch eine Drehbewegung des Filterelements (18; 518) relativ zum Befestigungsgehäuseteil (14; 514) um eine Dreh-/Steckachse (30; 530) bewirkt, zum Bewegen des Rastmittels (32) aus dem Einfuhr-/Ausfuhrbereich (46) in den Schließbereich (40) oder aus dem Rückhaltebereich (42) in den Einfuhr-/Ausfuhrbereich (46), je nach Position des Rastmittels (32) in der Aussparung (38) vor Einwirkung der Axialbewegung,
wobei die Schalteinrichtung (58; 558) wenigstens ein elastisches Element, insbesondere eine Spiraldruckfeder (84; 584), aufweist zur Realisierung einer Vorspannung zwischen dem Befestigungsgehäuseteil (14; 514) und dem Filterelement (18; 518).

## Claims

1. Filter (10) for filtering fluids, in particular fuel or oil, in particular of a motor vehicle, comprising a filter housing (12) made of at least two housing components (14, 16; 514), and a filter element (18; 518) which is attached by means of a detachable locking connection (20) in one of the housing components and which acts as fastening housing part (14; 14) for the filter element (18; 518), wherein the locking connection (20) features at least two interacting detent members (32, 36), and one of the detent members (32) is connected to the filter element (18; 518) and one of the detent members (36) to the fastening housing part (14; 514), and at least one of the detent members comprises at least one latching means (32) and one of the detent members (36) comprises a recess (38) corresponding with the latching means (32) in which the latching means (32) engages in a bayonet-like manner, and the recess (38) features the following areas:
a closing area (40) for receiving the latching means (32) during the connection of the housing components (14, 16; 514),
a retaining area (42) for receiving the latching means (32) during the opening of the filter housing (12),
a translation area (44) for detaching the latching means (32) in the recess (38) and
an insertion/removal area (46) for joining and separating latching means (32) and recess (38) without resistance,
**characterized in that**
the filter (10) features a switching device (58; 518) comprising at least two corresponding switching components (60, 78; 560), wherein one of the switching components (60; 560) is connected to the filter element (18; 518) and one of the switching components (62; 562) to the fastening housing part (14; 514), and one of the switching components (60; 560) comprises at least one switching nose (76; 576) extending radially relative to a rotational/plug-in axis (30; 530) of the filter (10) and one of the switching components (62; 562) comprises a shifting gate (78; 578) for guiding the switching nose (76; 576) in such a way that the shifting gate (78; 578), in case of an axial movement in a pulsed manner of the filter element (18; 518) relative to the fastening housing part (14; 514), guides the switching nose (76; 576) and thus causes a rotating movement of the filter element (18; 518) relative to the fastening housing part (14; 114) around the rotational/plug-in axis (30; 530) for relocating the latching means (32) from the insertion/removal area (46) into the closing area (40) or from the retaining area (42) into the insertion/removal area (46), depending on the position of the latching means (32) in the recess (38) before the action of the axial movement.
wherein the switching device (58; 558) features at least one resilient element, in particular a spiral compression spring (84; 584) for realizing a pretension between the fastening housing part (14; 514) and the filter element (18; 518).

2. Filter according to claim 1, **characterized in that** the shifting gate (78; 578) is realized as switch sleeve (62; 562) which features in circumferential direction a succession of sequential teeth (80; 580) or guide angles (182).

3. Filter according to claim 1 or 2, **characterized in that** the switching components feature a telescopic switching element (60; 560) with a fixed cylinder (64; 164; 264) and a plunger cylinder (70; 170; 270), between which acts the resilient element (84; 584), and which can be telescoped for introducing the filter element (18; 518) into the fastening housing part (14; 514) by realizing a pretension of the resilient element (84; 584).

4. Filter according to claim 3, **characterized in that** the telescopic switching element (560) features a detachable locking mechanism (559) which is activated in basic state and blocks the telescoping of the telescopic switching element (560), and that the other switching component (562) features at least one unlocking element (583) which is adapted to the locking mechanism (559) in such a way that the unlocking element (583) during assembly of the telescopic switching element (560) and the other switching component (562) deactivates the locking mechanism (559).

5. Filter according to one of the above claims, **characterized in that** in particular an annular gasket (86; 186), which is axially displaceable with respect to the rotational/plug-in axis (30) relative to the filter element (18), is attached to a front side of the filter element (18) for sealing against the filter housing (12).

6. Filter element (18; 518) of a filter (10), in particular according to one of the above claims, featuring a detent member (32) suitable to form a detachable locking connection (20) with a detent member (36) which is connected to a fastening housing part (14) of a filter housing (12), wherein one of the detent members comprises at least one latching means (32) and one of the detent members (36) comprises a recess (38) corresponding with the latching means (32) in which the latching means (32) engages in a bayonet-like manner, wherein the recess (38) features a closing area (40), a retaining area (42), a translation area (44) and an insertion/removal area (46), **characterized in that** the filter element (18; 518) comprises a switching component (62; 562) with a shifting gate (78; 578) suitable to guide a switching nose (76; 576) of a switching component (60; 560) of the fastening housing part (14; 514) in such a way that in a switching device (58; 558) formed by means of the switching components (60, 62; 562, 562) in case of an axial movement in a pulsed manner of the filter element (18; 518) relative to the fastening housing part (14; 514) the switching nose (76; 576) is guided in the shifting gate (78; 578) and thus causes a rotating movement of the filter element (18; 518) relative to the fastening housing part (14; 514) around the rotational/plug-in axis (30; 530) for relocating the latching means (32) from the insertion/removal area (46) into the closing area (40) or from the retaining area (42) into the insertion/removal area (46), depending on the position of the latching means (32) in the recess (38) before the action of the axial movement.

7. Filter element according to claim 6, **characterized by** an annular gasket (86; 186), which is axially displaceable relative to the filter element (18), on a front side of the filter element (18) for sealing against the filter housing (12).

8. Filter element according to claim 6 or 7, **characterized in that** it features at least one unlocking element (583) suitable to deactivate a detachable locking mechanism (559) of a telescopic switching element (560) of the switching device (558) when installing the filter element (518) in the fastening housing part (514).

9. Fastening housing part (14; 514) of a filter housing (12) of a filter (10), in particular according to one of the above claims, featuring a detent member (36) connected to a detent member (32) which is suitable to form a detachable locking connection (20) with a filter element (18; 518) of the filter (10), wherein at least one of the detent members comprises at least one latching means (32) and one of the detent members (36) comprises a recess (38) corresponding with the latching means (32) in which the latching means (32) engages in a bayonet-like manner, wherein the recess (38) features a closing area (40), a retaining area (42), a translation area (44) and an insertion/removal area (46) **characterized in that**
the fastening housing part (14; 514) comprises a switching component (60; 560) with a switching nose (76; 576) suitable to cooperate with a shifting gate (78; 578) of a switching component (62; 562) of the filter element (18; 528) in such a way that a switching device (58; 558) formed by means of the switching components (60, 62; 560, 562) in case of an axial movement in a pulsed manner of the filter element (18; 518) relative to the fastening housing part (14; 514) guides the switching nose (76; 576) and thus causes a rotating movement of the filter element (18; 518) relative to the fastening housing part (14; 514) around a rotational/plug-in axis (30; 530) for relocating the latching means (32) from the insertion/removal area (46) into the closing area (40) or from the retaining area (42) into the insertion/removal area (46), depending on the position of the latching means (32) in the recess (38) before the action of the axial movement.
wherein the switching device (58; 558) features at least one resilient element, in particular a spiral compression spring (84; 584) for realizing a pretension between the fastening housing part (14; 514) and the filter element (18; 518).

## Revendications

1. Filtre (10) destiné à filtrer des fluides, notamment carburant ou huile, notamment d'un véhicule automobile, comprenant un boîtier de filtre (12) constitué d'au moins deux parties de boîtier (14, 16 ; 514), et un élément filtrant (18 ; 518) qui est attaché au moyen d'une liaison par encliquetage (20) dans une des parties de boîtier et qui agit en tant que partie de boîtier de fixation (14; 14) pour l'élément filtrant (18 ; 518), la liaison par encliquetage (20) présentant au moins deux éléments d'arrêt (32, 36) interagissant et l'un des éléments d'arrêt (32) étant relié à l'élément filtrant (18 ; 518) et l'un des éléments d'arrêt (36) étant relié à la partie de partie de boîtier de fixation (14 ; 514) et au moins l'un des éléments d'arrêt comprenant au moins un élément d'encliquetage (32) et l'un des éléments d'arrêt (36) comprenant un évidement (38) correspondant avec l'élément d'encliquetage (32) dans lequel l'élément d'encliquetage (32) est accroché à la manière d'une baïonnette, et l'évidement (38) présentant des zones suivantes :
une zone de fermeture (40) destinée à recevoir l'élément d'encliquetage (32) pendant l'assemblage des parties de boîtier (14, 16 ; 514),
une zone de retenue (42) destinée à recevoir l'élément d'encliquetage (32) pendant l'ouverture du boîtier de filtre (12),
une zone de translation (44) destinée à détacher l'élément d'encliquetage (32) dans l'évidement (38) et
une zone d'entrée/de sortie (46) destinée à assembler et à séparer sans résistance l'élément d'encliquetage (32) et l'évidement (38),
**caractérisé en ce que**
le filtre (10) présente un dispositif de commande (58 ; 558) qui comprend au moins deux composants de commande (60, 78 ; 560) correspondant, l'un des composants de commande (60 ; 560) étant relié à l'élément filtrant (18 ; 518) et l'un des composants de commande (62 ; 562) étant relié à la partie de partie de boîtier de fixation (14 ; 514) et l'un des composants de commande (60 ; 560) comprenant au moins un ergot de commande (76 ; 576) s'étendant radialement par rapport à un axe rotatif/enfichable (30 ; 530) du filtre (10) et l'un des composants de commande (62 ; 562) comprenant une coulisse de commande (78 ; 578) destinée à guider l'ergot de commande (76 ; 576) de sorte que la coulisse de commande (78 ; 578), lors d'un mouvement axial pulsé de l'élément filtrant (18 ; 518), de manière relative sur la partie de boîtier de fixation (14 ; 514) guide l'ergot de commande (76 ; 576) causant ainsi un mouvement de rotation de l'élément filtrant (18 ; 518) relatif par rapport à la partie de partie de boîtier de fixation (14; 114) autour de l'axe rotatif/enfichable (30 ; 530) pour déplacer l'élément d'encliquetage (32) de la zone d'entrée/de sortie (46) dans la zone de fermeture (40) ou de la zone de retenue (42) dans la zone d'entrée/de sortie (46), selon la position de l'élément d'encliquetage (32) dans l'évidement (38) avant l'action du mouvement axial.
le dispositif de commande (58 ; 558) présentant au moins un élément élastique, notamment un ressort de pression en spirale (84 ; 584), pour réaliser une prétension entre la partie de partie de boîtier de fixation (14 ; 514) et l'élément filtrant (18 ; 518).

2. Filtre selon la revendication 1, **caractérisé en ce que** la coulisse de commande (78 ; 578) est réalisée en tant que douille de commande (62 ; 562) présentant en sens circonférentiel une succession de dents séquentielles (80 ; 580) ou d'angles de guidage (182).

3. Filtre selon la revendication 1 ou 2, **caractérisé en ce que** l'un des composants de commande présente un élément de commutation télescopique (60 ; 560) avec un cylindre fixe (64 ; 164 ; 264) et un cylindre d'immersion (70 ; 170 ; 270) entre lesquels agit l'élément élastique (84 ; 584) et qui peuvent être glissés les uns dans les autres pour introduire l'élément filtrant (18 ; 518) dans la partie de boîtier de fixation (14 ; 514) en réalisant une prétension de l'élément élastique (84 ; 584).

4. Filtre selon la revendication 3, **caractérisé en ce que** l'élément de commutation télescopique (560) présente un mécanisme de blocage (559) détachable qui est activé en état initial et bloque l'emboîtement de l'élément de commutation télescopique (560), et que l'autre composant de commande (562) présente au moins un élément de déverrouillage (583) qui est adapté au mécanisme de blocage (559) de sorte que lors de l'assemblage de l'élément de commutation télescopique (560) et de l'autre composant de commande (562) l'élément de déverrouillage (583) désactive le mécanisme de blocage (559).

5. Filtre selon l'une des revendications précédentes, **caractérisé en ce qu'**un joint annulaire (86; 186), qui peut être déplacé axialement par rapport à l'axe rotatif/enfichable (30) de manière relative par rapport à l'élément filtrant (18), est attaché sur une face frontale de l'élément filtrant (18) servant à l'étanchéité par rapport au boîtier de filtre (12).

6. Élément filtrant (18 ; 518) d'un filtre (10), notamment selon l'une des revendications précédentes, présentant un élément d'arrêt (32) adapté à former une liaison par encliquetage (20) détachable avec un élément d'arrêt (36) qui est relié à une partie de boîtier de fixation (14) d'un boîtier de filtre (12), l'un des éléments d'arrêt comprenant au moins un élément d'encliquetage (32) et l'un des éléments d'arrêt (36) comprenant un évidement (38) correspondant avec l'élément d'encliquetage (32) dans lequel l'élément d'encliquetage (32) est accroché à la manière d'une baïonnette, l'évidement (38) présentant une zone de fermeture (40), une zone de retenue (42), une zone de translation (44) et une zone d'entrée/de sortie (46), **caractérisé en ce que** l'élément filtrant (18 ; 518) comprend un composant de commande (62 ; 562) avec une coulisse de commande (78 ; 578), l'élément filtrant étant adapté à guider un ergot de commande (76 ; 576) d'un composant de commande (60 ; 560) de la partie de boîtier de fixation (14 ; 514) de sorte que dans un dispositif de commande (58 ; 558) formé avec les composants de commande (60, 62 ; 562, 562), lors d'un mouvement axial pulsé de l'élément filtrant (18 ; 518) de manière relative sur la partie de boîtier de fixation (14 ; 514), l'ergot de commande (76 ; 576) est guidé dans la coulisse de commande (78 ; 578) causant ainsi un mouvement de rotation de l'élément filtrant (18 ; 518) relatif par rapport à la partie de boîtier de fixation (14 ; 514) autour de l'axe rotatif/enfichable (30 ; 530) pour déplacer l'élément d'encliquetage (32) de la zone d'entrée/de sortie (46) dans la zone de fermeture (40) ou de la zone de retenue (42) dans la zone d'entrée/de sortie (46), selon la position de l'élément d'encliquetage (32) dans l'évidement (38) avant l'action du mouvement axial.

7. Élément filtrant selon la revendication 6, **caractérisé par** un joint annulaire (86 ; 186) sur une face frontale de l'élément filtrant (18) servant à l'étanchéité par rapport au boîtier de filtre (12), ce joint pouvant être déplacé axialement par rapport à l'élément filtrant (18).

8. Élément filtrant selon la revendication 6 ou 7, **caractérisé en ce qu'**il présente au moins un élément de déverrouillage (583) adapté à désactiver un mécanisme de blocage (559) détachable d'un élément de commutation télescopique (560) du dispositif de commande (558) lors du montage de l'élément filtrant (518) dans la partie de boîtier de fixation (514).

9. Partie de boîtier de fixation (14 ; 514) d'un boîtier de filtre (12) d'un filtre (10), notamment selon l'une des revendications précédentes présentant un élément d'arrêt (36) relié à un élément d'arrêt (32) qui est adapté à former une liaison par encliquetage (20) détachable avec un élément filtrant (18 ; 518) du filtre (10), au moins l'un des éléments d'arrêt comprenant au moins un élément d'encliquetage (32) et l'un des éléments d'arrêt (36) comprenant un évidement (38) correspondant avec l'élément d'encliquetage (32) dans lequel l'élément d'encliquetage (32) est accroché à la manière d'une baïonnette, l'évidement (38) présentant une zone de fermeture (40), une zone de retenue (42), une zone de translation (44) et une zone d'entrée/de sortie (46).
**caractérisé en ce que**
la partie de boîtier de fixation (14 ; 514) comprend un composant de commande (60 ; 560) avec un ergot de commande (76 ; 576) adapté à interagir avec une coulisse de commande (78; 578) d'un composant de commande(62 ; 562) de l'élément filtrant (18 ; 518) de sorte qu'un dispositif de commande (58 ; 558) formé par les composants de commande (60, 62 ; 560, 562), lors d'un mouvement axial pulsé de l'élément filtrant (18 ; 518) de manière relative sur la partie de boîtier de fixation (14 ; 514), guide l'ergot de commande (76 ; 576) causant ainsi un mouvement de rotation de l'élément filtrant (18 ; 518) relatif par rapport à la partie de boîtier de fixation (14 ; 514) autour d'un axe rotatif/enfichable (30 ; 530) pour déplacer l'élément d'encliquetage (32) de la zone d'entrée/de sortie (46) dans la zone de fermeture (40) ou de la zone de retenue (42) dans la zone d'entrée/de sortie (46), selon la position de l'élément d'encliquetage (32) dans l'évidement (38) avant l'action du mouvement axial.
le dispositif de commande (58 ; 558) présentant au moins un élément élastique, notamment un ressort de pression en spirale (84 ; 584), pour réaliser une prétension entre la partie de boîtier de fixation (14 ; 514) et l'élément filtrant (18 ; 518).
